# EUROPEAN PATENT APPLICATION

(11) **EP 4 554 284 A1**
(43) Date of publication of application: **14.05.2025**
(21) Application number: 23835788.3
(22) Date of filing: 04.07.2023
(51) Int. Cl.: H04W 36/08, H04W 36/00, H04W 48/10, H04W 84/04

(54) **METHOD FOR CONTROLLING OPERATION OF MOBILE RELAY, AND APPARATUS THEREOF**

(30) Priority: 04.07.2022 KR 20220081684; 28.06.2023 KR 20230083426
(71) Applicant: KT Corporation, Seongnam-si, Gyeonggi-do 13606 (KR)
(72) Inventor: HONG, Sung Pyo, Seongnam-si Gyeonggi-do 13606 (KR)
(74) Representative: Brevalex
(86) International application number: PCT/KR2023/009384
(87) International publication number: WO 2024/010322

(57) **Abstract**

Provided are a method of a source donor base station for controlling controls operation of a mobile relay, and an apparatus thereof. The method may include: transmitting a handover request message to a target donor base station; receiving, from the target donor base station, a handover response message which contains radio resource configuration information for at least one of a mobile relay and terminals served by the mobile relay; and controlling to indicate the radio resource configuration information to at least one of the mobile relay and the terminals.

## Description

### TECHNICAL FIELD

The disclosure relates to controlling mobile relay operations in a mobile communication system.

### BACKGROUND ART

In wireless communication systems, relay technology has been used to extend cell coverage by employing network nodes.

Typical relay technology using LTE technology supports data transfer at the IP packet level of the relay node and is configured to allow only a single relay node to transfer IP packets between user equipment (UE) and a base station.

For example, the typical relay technology using LTE technology provides only a single hop relay function to provide simple services, and most of the configuration is directed and configured through static operation, administration, and management (OAM). Accordingly, it has been challenging to configure multi-hop relays.

When attempting to support multi-hop relays with typical LTE technology, there are problems in that it may impossible to process data distinctively with the multiple relay nodes, and that signaling and data processing over the IP layer may increase latency.

To address this, research is being undertaken into technologies for forming multi-hop connections to accurately transfer user data to the base station, and in NR, research on integrated access and backhaul (IAB) technology is being undertaken.

In particular, various types of IAB nodes have been studied recently, and technologies for mobile relays, each of which has mobility and uses an IAB node, have been studied. In this case, mobility support technology may be required differently from typical IAB nodes having a fixed configuration.

### DISCLOSURE

### Technical Problem

The disclosure is intended to propose a technology for controlling mobile relay operations in a mobile communication system.

### Technical Solution

According to an embodiment, a method may be provided for controlling operations of a mobile relay by a source donor base station. The method may include: transmitting a handover request message to a target donor base station; receiving, from the target donor base station, a handover response message including radio resource configuration information for at least one of a mobile relay or user equipment served by the mobile relay; and performing control to direct that radio resource configuration information to at least one of the mobile relay and the user equipment.

According to another embodiment, a method may be provided for controlling operations of a mobile relay by a target donor base station. The method may include: receiving a handover request message from a source donor base station; and transmitting, to the source donor base station, a handover response message including radio resource configuration information for at least one of a mobile relay or user equipment served by the mobile relay, wherein the radio resource configuration information is directed by the source donor base station to at least one of the mobile relay and the user equipment.

According to another embodiment. A source donor base station may be provided for controlling operations of a mobile relay. The source donor base station may include: a transmitter for transmitting a handover request message to a target donor base station; a receiver for receiving, from the target donor base station, a handover response message including radio resource configuration information for at least one of a mobile relay or user equipment served by the mobile relay; and a controller for controlling to direct the radio resource configuration information to at least one of the mobile relay and the user equipment.

According to another embodiment, a target donor base station may be provided for controlling operations of a mobile relay. The target donor base station may include: a receiver which receives a handover request message from a source donor base station; and a transmitter which transmits, to the source donor base station, a handover response message including radio resource configuration information for at least one of a mobile relay or user equipment served by the mobile relay, wherein the radio resource configuration information is directed by the source donor base station to at least one of the mobile relay or the user equipment.

### Advantageous Effects

According to embodiments of the disclosure, mobile relay operations may be effectively controlled in a mobile communication system.

### DESCRIPTION OF DRAWINGS

FIG. 1 is a diagram schematically illustrating an NR wireless communication system.
FIG. 2 is a diagram illustrating a frame structure in the NR system.
FIG. 3 is a diagram illustrating a resource grid supported by radio access technology.
FIG. 4 is a diagram illustrating a BWP supported by radio access technology.
FIG. 5 is a diagram illustrating an example of a synchronization signal block in radio access technology.
FIG. 6 is a diagram illustrating a random access procedure in radio access technology.
FIG. 7 is a diagram illustrating a CORESET.
FIG. 8 is a diagram schematically illustrating a structure of an IAB structure according to an embodiment of the disclosure.
FIG. 9 is a diagram illustrating the relationship between parent nodes and child nodes about IAB nodes according to an embodiment of the disclosure.
FIG. 10 is a flowchart illustrating the operation of the source donor base station according to an embodiment of the disclosure.
FIG. 11 is a flowchart illustrating the operation of the target donor base station according to an embodiment.
FIG. 12 is a diagram illustrating an example of an F1-U protocol stack.
FIG. 13 is a diagram illustrating an example of a protocol stack for user equipment access which uses mobile relaying.
FIG. 14 is a diagram illustrating an example of a BAP data PDU format.
FIG. 15 is a diagram illustrating an example of an Inter IAB-donor-CU topology adaptation procedure.
FIG. 16 is a diagram illustrating an example of a protocol structure in the mobile relay handover.
FIG. 17 is a diagram illustrating another example of a protocol structure in the mobile relay handover.
FIG. 18 is a diagram illustrating another example of a protocol structure in the mobile relay handover.
FIG. 19 is a block diagram illustrating a source donor base station according to an embodiment.
FIG. 20 is a block diagram illustrating a target donor base station according to an embodiment.

### BEST MODE

Hereinafter, some embodiments of the disclosure will be described in detail with reference to the illustrative drawings. In designating elements of the drawings by reference numerals, the same elements will be designated by the same reference numerals although they are shown in different drawings. Furthermore, in describing embodiments, a detailed description of related known configurations or functions may be omitted when it is determined that the main technical idea of the disclosure may be obscured thereby. It will be understood that the terms "comprise", "include", "have", and any variations thereof used herein are intended to cover non-exclusive inclusions unless explicitly stated to the contrary. Descriptions of elements in the singular form used herein are intended to include descriptions of elements in the plural form, unless explicitly stated to the contrary.

Furthermore, terms, such as first, second, A, B, (a), or (b), may be used herein when describing elements of the disclosure. Each of these terminologies is not used to define the essence, order, sequence, or number of corresponding elements but used merely to distinguish the corresponding elements from other elements

In describing the positional relationship between elements, it will be understood that when two or more elements are referred to as being "connected", "coupled", or "joined" to each other, the elements may not only be "directly connected, coupled, or joined" to each other, but the elements may also be "indirectly connected, coupled, or joined" to each other via an "intervening" element. Here, the intervening element may be included in at least one of the two or more elements "connected", "coupled", or "joined" to each other.

In describing temporal flow relationships with respect to elements, methods of operation, or methods of production, for example, when a temporal antecedent or flow antecedent relationship, such as "after," "following," "next to," or "before," is described, noncontinuous cases may also be included unless "immediately" or "directly" is used.

In addition, when numerical values for elements or corresponding information (e.g., level) are stated, the numerical values or information should be interpreted as including a tolerance or error range which may be caused by various factors (e.g., process factors, internal or external impacts, or noise) even if not explicitly stated otherwise.

The term "wireless communications system" used herein may refer to a system providing a range of communication services, including voice and packet data, using radio (or wireless) resources, and may include user equipment (UE), a base station, a core network, or the like.

Embodiments disclosed hereinafter may be used in wireless communications systems using a range of radio (or wireless) access technologies. For example, embodiments may be used in a range of radio access technologies, such as code division multiple access (CDMA), frequency division multiple access (FDMA), time division multiple access (TDMA), orthogonal frequency division multiple access (OFDMA), single carrier frequency division multiple access (SC-FDMA), or non-orthogonal multiple access (NOMA). Furthermore, radio access technologies may mean not only particular access technologies but also communications technologies according to the generation, established by a variety of communications consultative organizations, such as the 3^{rd} generation partnership project (3GPP), the 3^{rd} generation partnership project 2 (3GPP2), the Wi-Fi alliance, the Bluetooth, the institute of electrical and electronics engineers (IEEE), and the international telecommunication union (ITU). For example, CDMA may be realized by a wireless technology, such as universal terrestrial radio access (UTRA) or CDMA2000. TDMA may be realized by a wireless technology, such as the global system for mobile communications (GSM), general packet radio service (GPRS), or enhanced data rates for GSM evolution (EDGE). OFDMA may be realized by a wireless technology, such as IEEE 802.11 (Wi-Fi), IEEE 802.16 (WiMAX), IEEE 802-20, or evolved-UMTS terrestrial radio access (E-UTRA). IEEE 802.16m, evolved from IEEE 802.16e, provides backward compatibility with systems based on IEEE 802.16e. UTRA is a portion of universal mobile telecommunications system (UMTS). 3rd generation partnership project (3GPP) long term evolution (LTE) is a portion of evolved UMTS (E-UMTS) using E-UTRA and uses OFDMA in downlinks and SC-FDMA in uplinks. In this manner, embodiments of the disclosure may be used in radio access technologies which are currently disclosed or commercially available or may be used in any radio access technology which are currently being, or will be, developed.

In addition, the term "user equipment (UE)" used herein should be interpreted as being a comprehensive term referring to a wireless communications module which communicates with a base station in a wireless communications system, and UE should be interpreted as including not only user equipment in wideband code division multiple access (WCDMA), LTE, new radio access technology (NR), high speed packet access (HSPA), international mobile telecommunications-2020 (IMT-2020; 5G or New Radio), and the like, but also all of a mobile station (MS), a user terminal (UT), a subscriber station (SS), a wireless device, and the like, used in GSM. The user equipment may refer to a mobile user device, such as a smartphone, depending on the type of use or may refer to a vehicle, a device including a wireless communications module in the vehicle, or the like in the vehicle-to-everything (V2X) communications system. Furthermore, in the machine type communications (MTC) system, the user equipment may refer to MTC user equipment, machine-to-machine (M2M) user equipment, ultra-reliability and low latency communications (URLLC) user equipment, or the like, provided with a communications module able to perform machine type communications.

The term "base station" or "cell" used herein refers to an end in a network, communicating with the user equipment, and comprehensively refers to a variety of coverage areas, such as a node-B, an evolved node-B (eNB), a gNodeB (gNB), a low power node (LPN), a sector, a site, an antenna having a variety of shapes, a base transceiver system (BTS), an access point, a point (e.g. a transmission point, a reception point, or a transmission/reception point), a relay node, a megacell, a macrocell, a microcell, a picocell, a femtocell, a remote radio head (RRH), a radio unit (RU), and a small cell. The cell may also be understood as including a bandwidth part (BWP) in a frequency domain. For example, a serving cell may refer to an activation BWP of the user equipment.

Because at least one of the variety of cells as stated above is controlled by a dedicated base station, the base station may be interpreted in two senses. Each of the base stations 1) may be a device itself which provides a megacell, a macrocell, a microcell, a picocell, a femtocell, or a small cell in relation to a wireless communication area or 2) may refer to the wireless communication area itself. In 1), in case that apparatuses providing wireless areas are controlled by the same entity or apparatuses interact with one another to form a wireless area in a coordinated manner, all of such apparatuses may be referred to as base stations. According to the configuration of the wireless area, the point, the transmission/reception point, the transmission point, the reception point, and the like are examples of the base station. In 2), the wireless area itself in which a signal is received or transmitted may be referred to as a base station, from the perspective of a user or a neighboring base station.

The term "cell" used herein may refer to a coverage of a signal transmitted from the transmission point or the transmission/reception point, a component carrier having the coverage of the signal transmitted from the transmission point or the transmission/reception point, or the transmission point or the transmission/reception point itself.

The term "uplink (UL)" refers to a data transmission/reception method by which data is transmitted from the user equipment to the base station, whereas the term "downlink (DL)" refers to a data transmission/reception method by which data is transmitted from the base station to the user equipment. The downlink may refer to communications or a communication path from a multiple transmission/reception point to the user equipment, whereas the uplink may refer to communications or a communication path from the user equipment to the multiple transmission/reception point. Here, in the downlink, a transmitter may be a portion of the multiple transmission/reception point, whereas a receiver may be a portion of the user equipment. Furthermore, in the uplink, the transmitter may be a portion of the user equipment, whereas the receiver may be a portion of the multiple transmission/reception point.

The uplink and the downlink transmit and receive control information via a control channel, such as a physical downlink control channel (PDCCH) or a physical uplink control channel (PUCCH) and transmit and receive data by forming a data channel, such as a physical downlink shared channel (PDSCH) or a physical uplink shared channel (PUSCH). In the following, transmitting or receiving a signal via a channel, such as PUCCH, PUSCH, PDCCH, or PDSCH, may also be referred to as "transmitting or receiving PUCCH, PUSCH, PDCCH, or PDSCH".

To clarify the description, the principle of the disclosure will be described with respect to a 3GPP LTE/LTE-A/NR (New RAT) communications system, but the technical features of the disclosure are not limited to this communications system.

In 3GPP, 5th generation (5G) communications technology is being developed to meet the next generation radio access technology requirements of the international telecommunication union radio-communication sector (ITU-R) after 4th generation (4G) communications technology. Specifically, in 3GPP, research on new NR communications technology separate from LTE advanced Pro (LTE-A Pro) and 4G telecommunications technology improved from LTE Advanced in accordance with the ITU-R requirements is being developed as 5G communications technology. Both LTE-A Pro and NR refer to 5G communications technology, and 5G communications technology will be described with respect to NR in the following, except that a particular communications technology is specified.

In NR, a variety of operation scenarios are defined by adding considerations about satellites, vehicles, new vertical services, and the like to in typical 4G LTE scenarios. In terms of services, an enhanced mobile broadband (eMBB) scenario, a massive machine communication (MMTC) scenario having high user equipment density, deployed over a wide range, and requiring low data rates and asynchronous accesses, and an ultra-reliability and low latency communications (URLLC) scenario requiring high responsiveness and reliability and capable of supporting high-speed mobility are supported.

To meet the scenario described above, NR discloses a wireless communications system using technologies providing a new waveform and frame structure, providing a low latency, supporting ultrahigh frequency waves (mmWave), and providing forward compatibility. In particular, the NR system presents various technical changes in terms of flexibility in order to provide forward compatibility. Major technical features of NR will be described in the following with reference to the drawings.

### <General of NR System>

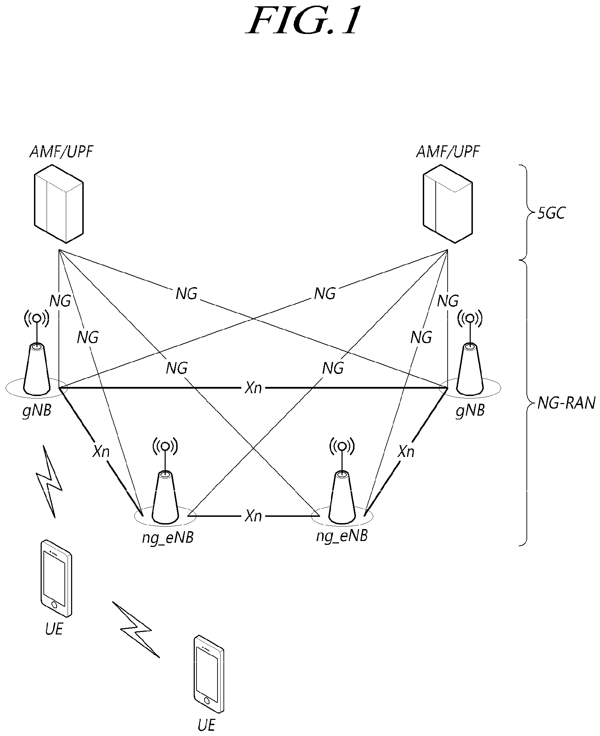

FIG. 1 is a diagram schematically illustrating a structure of an NR system.

Referring to FIG. 1, the NR system is divided into a 5G core network (5GC) part and an NR-RAN part. The NG-RAN includes gNBs and ng-eNBs providing a control plane (or a radio resource control (RRC)) protocol ends of a user plane (SDAP/PDCP/RLC/MAC/PHY) and user equipment (UE). The gNBs are connected to each other, or the gNBs and the ng-eNBs are connected to each other via an Xn interface. The gNBs and the ng-eNBs are connected to each other to the 5GC via an NG interface. The 5GC may include an access and mobility management function (AMF) managing a control plane, such as terminal access and mobility control functions, and a user plane function (UPF) managing a control function over user data. The NR system includes support for both a frequency range of 6GHz or lower, i.e. frequency range 1 (FR1), and a frequency range of 6GHz or higher, i.e. frequency range 2 (FR2).

The gNBs refer to base stations providing the NR user plane and control plane protocol ends to the user equipment, whereas the ng-eNBs refer to base stations providing E-UTRA user plane and control plane protocol ends to the user equipment. The term "base station" used herein should be understood as comprehensively referring to the gNB and the ng-eNB or may be used as distinctively referring to the gNB or the ng-eNB as desired.

### <NR Waveform, Numerology, and Frame Structure>

NR uses cyclic prefix orthogonal frequency-division multiplexing (CP-OFDM) waveforms using the cyclic prefix (CP) for downlink transmissions and CP-OFDM or discrete Fourier transform spread (DFT-s)-OFDM for uplink transmissions. OFDM technology offers advantages, including seamless integration with multiple-input multiple-output (MIMO) methods, high frequency efficiency, and the ability to utilize low-complexity receivers.

In addition, NR has different requirements for data rate, latency, coverage, and the like according to the above-described three scenarios. Thus, it is requested to efficiently meet the requirements according to the scenarios through frequency ranges of the NR system. In this regard, a technology for efficiently multiplexing a plurality of different numerology-based radio resources has been proposed.

Specifically, NR transmission numerology is determined based on the subcarrier spacing and the CP, and µ values are used as exponential values of 2 based on 15 kHz and are exponentially changed, as illustrated in Table 1 below.

**[Table1]**

| µ | Subcarrier Spacing | Cyclic prefix | Supported for data | Supported for synch |
|---|---|---|---|---|
| 0 | 15 | Normal | Yes | Yes |
| 1 | 30 | Normal | Yes | Yes |
| 2 | 60 | Normal, Extended | Yes | No |
| 3 | 120 | Normal | Yes | Yes |
| 4 | 240 | Normal | No | Yes |

As illustrated in Table 1 above, the numerology of NR may be divided into five types according to the subcarrier spacing. This differs from the subcarrier spacing of LTE, i.e. one of 4G communications technologies, which is fixed to 15 kHz. Specifically, in NR, the subcarrier spacings used for data transmissions are 15, 30, 60, and 120 kHz, and the subcarrier spacings used for synchronous signal transmissions are 15, 30, 120, and 240 kHz. Furthermore, an extended CP is only applied to 60 kHz subcarrier spacing. In addition, the frame structure in NR is defined as a frame having a length of 10 ms comprised of 10 subframes having the same lengths of 10 ms. A single frame may be divided into 5 ms half frames, each of which includes five subframes. In the case of 15 kHz subcarrier spacing, a single subframe includes a single slot, and each slot includes fourteen (14) OFDM symbols.

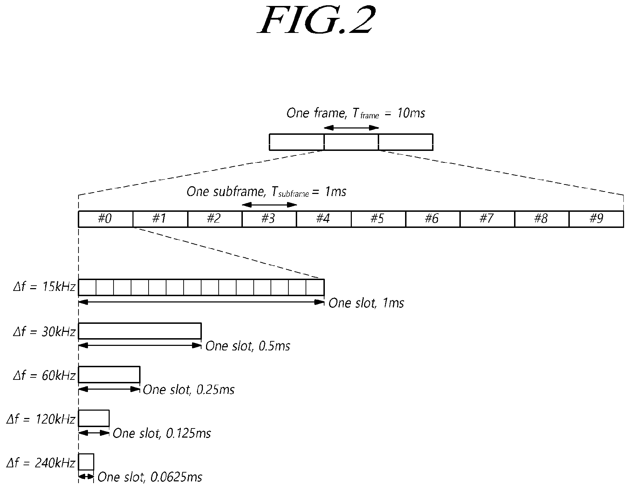

FIG. 2 is a diagram illustrating a frame structure in the NR system.

Referring to FIG. 2, the slot is constantly comprised of 14 OFDM symbols in the case of a normal CP, but the length of the slot in the time domain may vary depending on the subcarrier spacing. In an example, when the numerology uses the 15 kHz subcarrier spacing, the length of the slot is 1 ms, equal to that of the subframe. As another example, when the numerology has the 30 kHz subcarrier spacing, the slot may be comprised of 14 OFDM symbols and have 0.5 ms length, such that two slots may be included in a single subframe. That is, each of the subframe and the frame is defined having a fixed time length, and the slot may be defined by the number of symbols, such that the time length may vary depending on the subcarrier spacing.

In addition, in NR, the slot is defined as a basic unit of the scheduling, and a mini-slot (or a sub-slot or a non-slot based schedule) is also introduced to reduce a transmission delay in a wireless section. When a wide subcarrier spacing is used, the length of a single slot is shortened in inverse proportion thereto, and thus the transmission delay in the wireless section may be reduced. The mini-slot (or sub-slot) is devised to efficiently support URLLC scenarios and scheduling based on 2, 4, or 7 symbols may be possible.

Furthermore, unlike LTE, NR defines uplink and downlink resource allocations as symbol levels in a single slot. To reduce hybrid automatic repeat request (HARQ) latency, a slot structure able to directly transmit an HARQ acknowledgement/negative acknowledgement (ACK/NACK) in a transmission slot is defined. This slot structure will be named and described as a self-contained structure.

NR is designed to support a total of 256 slot formats, 62 of which are used in 3GPP Rel-15. In addition, various slot combinations support a common frame structure including an FDD or TDD frame. For example, NR supports a slot structure in which all symbols of the slot are configured as downlinks, a slot structure in which all symbols of the slot are configured as uplinks, and a slot structure in which downlink symbols and uplink symbols are combined. Furthermore, NR supports a form of scheduling in which data transmission is distributed in one or more slots. Accordingly, the base station may inform the user equipment of whether or not a corresponding slot is a downlink slot, an uplink slot, or a flexible slot using a slot format indicator (SFI). The base station may direct a slot format by directing an index of a table, configured by user equipment-specific RRC signaling using the SFI, dynamically using downlink control information (DCI) or statically or quasi-statically through the RRC.

### <NR Physical Resource>

Regarding the physical resources in NR, antenna ports, resource grids, resource elements (RE), resource blocks, bandwidth parts (BWPs), and the like are considered.

The antenna port is defined such that a channel carrying a symbol on an antenna port may be inferred from a channel carrying another symbol on the same antenna port. In case that the large-scale property of a channel carrying the symbol on an antenna port is inferable from a channel carrying a symbol on another antenna port, the two antenna ports may be in a quasi co-located or quasi co-location (QC/QCL) relationship. Here, the large-scale property includes at least one of a delay spread, a Doppler spread, a frequency shift, average received power, or received timing.

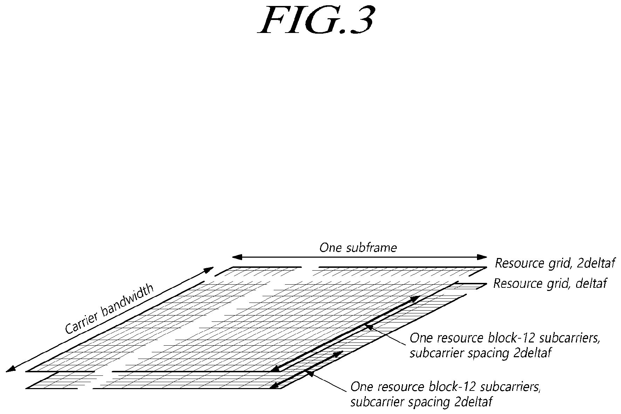

FIG. 3 is a diagram illustrating a resource grid supported by radio access technology.

Referring to FIG. 3, because NR supports multiple numerologies in the same carrier, the resource grid may be present for each numerology. Furthermore, the resource grid may be configured depending on the antenna port, the subcarrier spacing, and the transmission direction.

A resource block is comprised of 12 subcarriers and is only defined in a frequency domain. Furthermore, a resource element is comprised of a single OFDM symbol and a single subcarrier. Therefore, as shown in FIG. 3, the size of a single resource block may vary depending on the subcarrier spacing. Furthermore, NR defines "point A", a common resource block, a virtual resource block, and the like, where the "point A" serves as a common reference point for resource block grids.

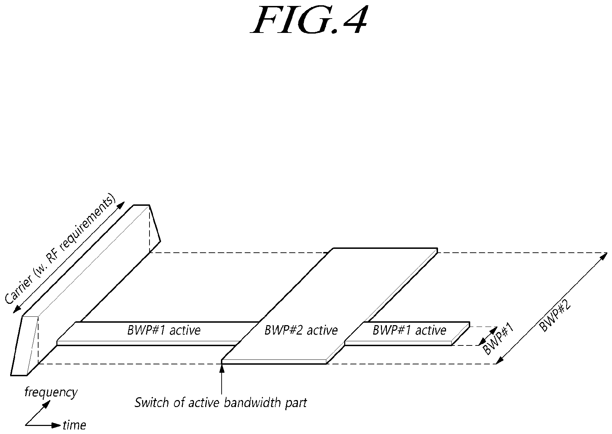

FIG. 4 is a diagram illustrating a BWP supported by radio access technology to which an embodiment of the disclosure is applicable.

In the NR, the maximum carrier bandwidth is configured to be in the range from 50 MHz to 400 MHz depending on the subcarrier spacing, unlike in the LTE in which the carrier bandwidth thereof is fixed to 20 MHz. Therefore, it is not assumed that all user equipment uses all of these carrier bandwidths. Accordingly, as illustrated in FIG. 4, in NR, a bandwidth part (BWP) may be designated within a carrier bandwidth to be used by the user equipment. Furthermore, the BWP may be associated with a single numerology, be comprised of a contiguous subset of the common resource blocks, and be dynamically activated over time. The user equipment is provided with up to four BWPs in each of an uplink and a downlink, and transmits and receives data using an activated BWP at a given time.

In the case of a paired spectrum, uplink and downlink BWPs are configured independently. In the case of an unpaired spectrum, an uplink BWP and a downlink BWP are configured in a pair such that the center frequency may be shared therebetween to prevent unnecessary frequency re-tuning between downlink and uplink operations.

### <Initial NR Access>

In NR, the user equipment performs cell search and random access procedures to access a base station and perform communications with the base station.

The cell search procedure is a procedure of synchronizing the user equipment with the cell of a corresponding base station using a synchronization signal block (SSB) transmitted from the base station, acquiring a physical layer cell identifier (ID), and acquiring system information.

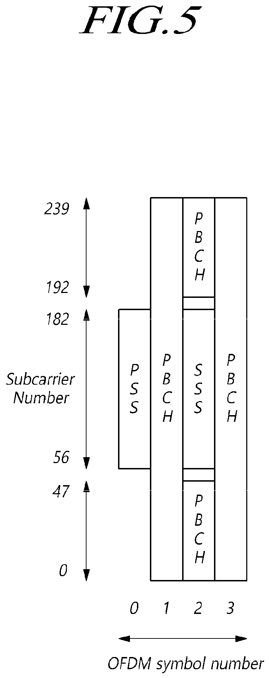

FIG. 5 is a diagram illustrating an example of a synchronization signal block in radio access technology.

Referring to FIG. 5, an SSB includes a primary synchronization signal (PSS) and a secondary synchronization signal (SSS), each of which occupies a single symbol and 127 subcarriers, and a physical broadcast channel (PBCH) covering three OFDM symbols and 240 subcarriers.

The user equipment receives the SSB by monitoring the SSB in time and frequency domains.

The SSB may be transmitted up to 64 times for 5 ms. A plurality of SSBs are transmitted on different transmission beams within a period of 5 ms, and the user equipment performs detection on the assumption that an SSB is transmitted at every 20 ms period, based on a single beam used for transmission. The number of beams which may be used for the SSB transmission within the 5 ms period may increase with increases in the frequency range. For example, up to four SSB beams may be transmitted in a frequency range of 3 GHz or lower. The SSB may be transmitted using up to eight beams in a frequency range of 3 to 6 GHz and up to 64 different beams in a frequency range of 6 GHz or higher.

Two SSBs are included in a single slot, and the start symbol and the number of repetitions in the slot are determined depending on the subcarrier spacing as will be described later.

In addition, unlike an SS of related-art LTE, the SSB is not transmitted at the center frequency of a carrier bandwidth. That is, the SSB may be transmitted at a frequency which is not the center frequency of a system range, and a plurality of SSBs may be transmitted in a frequency domain in case that a wideband operation is supported. Therefore, the user equipment monitors the SSBs using a synchronization raster which is a candidate frequency position for the monitoring of the SSBs. A carrier raster and a synchronous raster, which are center frequency position information of a channel for initial access, are newly defined in NR. The synchronous raster is configured to have a wider frequency interval than the carrier raster, and thus, may support the user equipment for fast SSB search.

The user equipment may acquire a master information block (MIB) through the PBCH of the SSB. The MIB includes minimum information by which the user equipment receives remaining minimum system information (RMSI) broadcast by the network. Furthermore, the PBCH may include information about the position of a first demodulation reference signal (DM-RS) symbol in the time domain, information for the user equipment to monitor system information block 1 (SIB1) (e.g. SIB1 numerology information, information about an SIB1 control resource set (CORESET), search space information, or PDCCH related parameter information), information about an offset between the common resource block and the SSB (in which the absolute position of the SSB in the carrier is transmitted via the SIB1), and the like. Here, the SIB1 numerology information is equally applied to some messages used in a random access procedure for accessing the base station after the user equipment has completed the cell search procedure. For example, the SIB1 numerology information may be applied to at least one of messages 1 to 4 for the random access procedure.

The above-described RMSI may refer to system information block 1 (SIB1), which is broadcast periodically (e.g. at 160 ms) in the cell. SIB1 includes information necessary for the user equipment to perform an initial random access procedure and is periodically transmitted through the PDSCH. For the user equipment to receive SIB1, the user equipment is requested to receive numerology information, which is used for SIB1 transmission, and control resource set (CORESET) information, which is used for SIB1 scheduling, through the PBCH. The user equipment checks scheduling information about SIB1 using a system information radio network temporary identifier (SI-RNTI) in the CORESET, and acquires SIB 1 on the PDSCH according to the scheduling information. The remaining SIBs other than SIB 1 may be transmitted periodically or at the request of the user equipment.

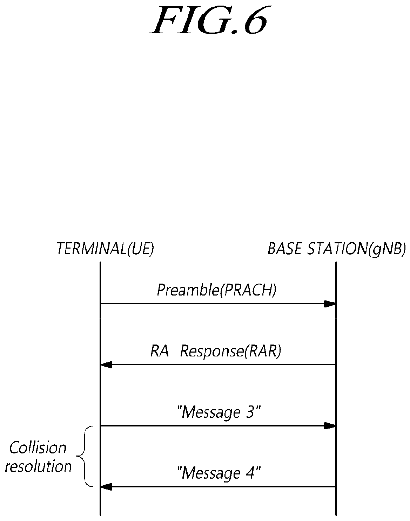

FIG. 6 is a diagram illustrating a random access procedure in radio access technology.

Referring to FIG. 6, when cell search is completed, the user equipment transmits a random access preamble for random access to the base station. The random access preamble is transmitted through a physical random access channel (PRACH). Specifically, the random access preamble is transmitted to the base station through the PRACH comprised of consecutive radio resources in a selected slot periodically repeated. In general, a contention-based random access procedure is performed when user equipment initially accesses a cell, whereas a non-contention based random access procedure is performed in case that random access is performed for beam failure recovery (BFR).

The user equipment receives a random access response to the transmitted random access preamble. The random access response may include a random access preamble identifier (ID), an uplink (UL) radio resource grant, a temporary cell radio network temporary ID (temporary C-RNTI), and a time alignment command (TAC). Because a single random access response may include random access response information about one or more pieces of user equipment, the random access preamble ID may be included to illustrate for which user equipment the included UL grant, the temporary C-RNTI, and the TAC are valid. The random access preamble ID may be an ID of the random access preamble which the base station has received. The TAC may be included as information by which the user equipment adjusts uplink synchronization. The random access response may be directed by a random access ID on the PDCCH, i.e., a random access-radio network temporary ID (RA-RNTI).

When receiving the valid random access response, the user equipment processes information included in the random access response and performs a scheduled transmission to the base station. For example, the user equipment applies the TAC and stores the temporary C-RNTI. Furthermore, data stored in a buffer of the user equipment or newly generated data is transmitted to the base station using the UL grant. In this case, information, which may identify the user equipment, is desirably included.

Finally, the RA-RNTI receives a downlink message for contention resolution.

### <NR CORESET>

In NR, a downlink control channel is transmitted on a control resource set (CORESET) having a length of 1 to 3 symbols. Up/down scheduling information, slot format index (SFI) information, transmit power control (TPC) information, and the like are transmitted through the downlink control channel.

NR introduces the concept of CORESET to secure the flexibility of the system as described above. The CORESET refers to a time-frequency resource for a downlink control signal. The user equipment may decode a control channel candidate using one or more search spaces in a CORESET time-frequency resource. CORESET-specific quasi colocation (QCL) assumption is established. In addition to characteristics assumed by related-art QCL, such as a delayed spread, a Doppler spread, a Doppler shift, or an average delay, the QCL assumption is used to inform the characteristics of analogue beam directions.

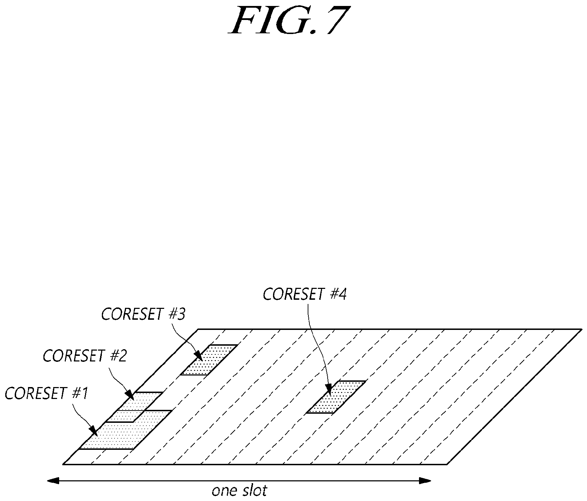

FIG. 7 is a diagram illustrating a CORESET.

Referring to FIG. 7, the CORESET may have a variety of forms within a carrier bandwidth in a single slot. The CORESET may be comprised of up to three OFDM symbols in the time domain. In addition, the CORESET is defined as a multiple of six resource blocks up to the carrier bandwidth in the frequency domain.

The first CORESET is a portion of an initial BWP configuration and is directed by the MIB to be able to receive additional configuration information and system information from the network. After establishing a connection to the base station, the user equipment may receive and configure one or more pieces of CORESET information by RRC signaling.

Herein, the frequency, the frame, the subframe, the resource, the resource block, the region, the band, the sub-band, the control channel, the data channel, the synchronization signal, various reference signals, various signals, or various messages, related to new radio (NR) access technology, may be interpreted as having a variety of meanings related to concepts used in the past, present, or future.

The disclosure introduces various embodiments with respect to technologies for controlling access to a mobile relay and controlling a mobile relay when user equipment served by the mobile relay is traveling together.

### Integrated Access and Backhaul (IAB)

IAB nodes enable wireless relaying in the next generation radio access network (NG-RAN). The relaying node, referred to as the IAB-node, supports access and backhauling via NR. The terminating node of NR backhauling on the network side is referred to as the IAB-donor, which represents a gNB with additional functionality to support the IAB.

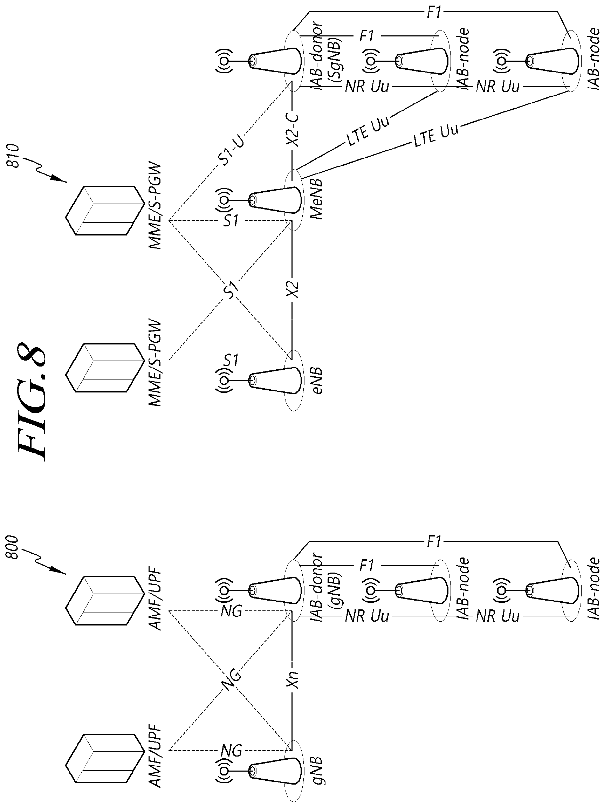

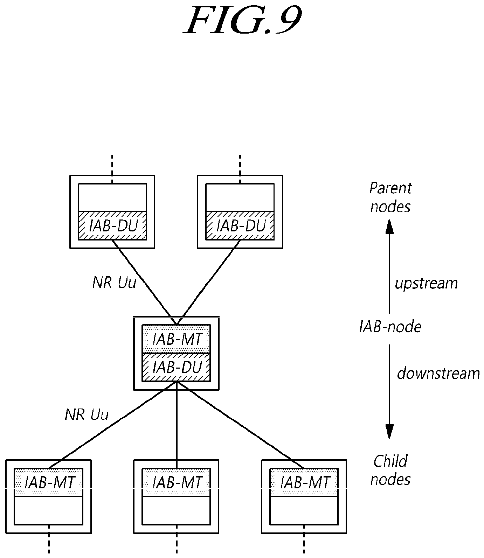

FIG. 8 is a diagram schematically illustrating a structure of an IAB structure according to an embodiment of the disclosure. FIG. 9 is a diagram illustrating relationship between parent nodes and child nodes about IAB nodes according to an embodiment of the disclosure.

Referring to FIG. 8, IAB nodes support a standalone mode 800 and a non-standalone mode 810. As shown in FIG. 9, the IAB nodes also support gNB-DU functionality, as defined in TS 38.401, to terminate the NR access interface to user equipment and next-hop IAB-nodes, and to terminate the F1 protocol to the gNB-CU functionality, as defined in TS 38.401, on the IAB-donor. The IAB-node DU may also be referred to as the IAB-DU. In addition to the gNB-DU functionality, the IAB-node also supports a subset of the user equipment functionality referred to as an IAB-MT which includes, e.g., a physical layer, layer-2, an RRC, and NAS functionality to connect to the gNB-DU of another IAB-node or the IAB-donor, to connect to the gNB-CU on the IAB-donor, and to connect to the core network.

3GPP has approved an item on the mobile relay based on the NR IAB structure and protocols standardized in the previous release. The item is intended to support vehicle-mounted mobile IAB node scenarios which provide 5G coverage/capacity enhancements for onboard and/or adjacent pieces of user equipment.

Mobile IAB nodes support in-band and out-of-band backhauling. Each of the mobile IAB nodes does not have a descendent IAB node. That is, the mobile IAB nodes only serve the user equipment.

However, traditional IAB technology fundamentally assumes that the IAB nodes operate in fixed positions for a period of time. For example, the IAB nodes are located stationary. IAB node migration between donor nodes did not support the typical IAB node handover in which the migrating IAB node disconnects from a source donor node and connects to a target donor node to send and receive data. Therefore, it was difficult to efficiently support the control and user data transmission due to the movement of the mobile IAB. Furthermore, the handover of the user equipment served by the mobile IAB may not be provided together in the mobile IAB topology adjustment process. In addition, distinct access control for mobile relays is not provided.

As described above, related-art IAB technologies have not been able to efficiently support the control and user data transmissions due to the movement of the IAB, or to hand over the user equipment served by the IAB when the IAB moves. Related-art IAB technologies also suffer from the inability to provide distinct access control for mobile relays.

Embodiments of the disclosure devised to address these problems are intended to provide methods and apparatus for effective access control and mobility control of mobile relays.

For clarity of explanation and ease of understanding, the following description will focus on relay/IAB node control methods based on NR technology. However, this is for illustrative purposes only and embodiments of the disclosure may be applied to relays based on any radio access technology (e.g., 6G and LTE).

An embodiment of the disclosure includes the contents of the information elements and operations specified in the NR/5GS specifications (e.g., TS38.300 for stage 2 specifications, TS 38.321 for MAC specifications, TS 38.331 for NR RRC specifications, and TS 23.501 for system structure specifications). Even if this specification does not include the contents of the user equipment operation associated with the definition of the corresponding information elements, the corresponding contents specified in the published standard specification may be included in the embodiment.

Any functionality described below may be defined as individual user equipment capability (e.g., user equipment radio capability or user equipment core network capability) and transmitted by the user equipment to the base station/core network entity (e.g., AMF/SMF) via corresponding signaling. As another example, any functionalities may be combined/unified to be defined as a corresponding user equipment capability and transmitted by the user equipment to the base station/core network entity via corresponding signaling.

For any of the functionalities or any combination of functionalities described below, the base station may transmit and/or direct information to the user equipment via an RRC message (e.g., a dedicated RRC message or system information), the information directing the functionality and/or combination of functionalities to be allowed, supported, and/or configured. For example, prior to or currently with the functionality and/or combination of functionalities is configured and/or applied, the information may be directed to the user equipment.

The functionalities described below may be performed individually and independently. It will be appreciated that the functionalities described below may be performed in a combined/unified form, which is also within the scope of the disclosure. For example, one or more functionalities may be applied simultaneously or sequentially in any order.

For clarity of explanation and ease of understanding, the mobile IAB node will be referred to as a mobile relay in the following. This is for illustrative purposes only, and any other name may be used.

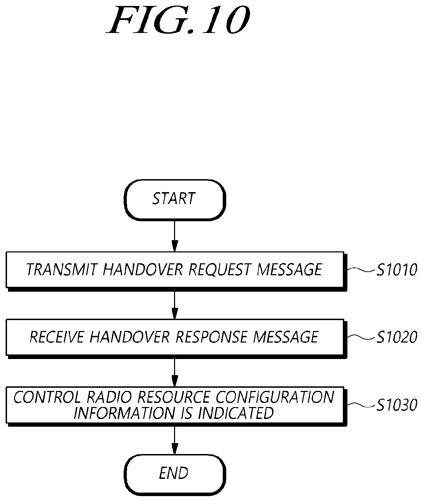

FIG. 10 is a flowchart illustrating operation of a source donor base station according to an embodiment of the disclosure.

Referring to FIG. 10, the method may be to controls operation of a mobile relay by the source donor base station. The method may include an operation S1010 of transmitting a handover request message to a target donor base station.

For example, the source donor base station may determine whether or not to hand over the mobile relay or the user equipment served by the mobile relay. The source donor base station may transmit a handover request message to a target donor base station to request a handover, in which the target donor base station is the target of the handover for the mobile relay or the user equipment served by the mobile relay. The handover request message may be an RRC message.

The handover request message may include information necessary for the mobile relay or the user equipment served by the mobile relay to hand over to the target donor base station.

According to an embodiment, the handover request message may include an RRC container (e.g., a handover preparation message) having information requested by the target side to prepare for handover.

According to another embodiment, the handover request message may include at least one of handover indication information of the mobile relay, cell indication information of the cell being served by the mobile relay, or user equipment context information for the user equipment being served by the mobile relay.

According to an embodiment, the handover indication information of the mobile relay may include at least one of mobile terminal (MT) handover indication information of the mobile relay or distributed unit (DU) migration indication information of the mobile relay. According to another embodiment, the cell indication information being served by the mobile relay may include at least one of cell indication information being served by a DU of the mobile relay or cell indication information provided by the mobile relay.

According to another embodiment, the handover request message may include at least one of BAP address information of the moving mobile relay, TNL address information (e.g., IP address information for the mobile relay and/or uplink/downlink transport-layer-address/IP-address or GTP-TEID(s) for mobile-relay-user-plane-traffic/F1-U-traffic), or a mobile relay identifier.

For example, the handover indication information of the mobile relay may include information directing that the handover is for the mobile relay. Accordingly, the target donor base station/IAB-donor-CU may recognize that the handover is for the mobile relay and process accordingly.

In addition, the handover request message may include information and requests desired in the handover process of the mobile relay or the user equipment served by the mobile relay, as described in the following detailed embodiments.

The method of controlling the operation of the mobile relay by the source donor base station may include an operation S1020 of receiving, from the target donor base station, a handover response message including radio resource configuration information for at least one of the mobile relay or the user equipment served by the mobile relay.

According to an embodiment, in response to the handover request message, the target donor base station may perform acceptance control for the handover request. The target donor base station may transmit a handover response message to the source donor base station in response to the handover request in the handover request message. The target donor base station may provide an RRC configuration as a part of the handover response message.

According to an embodiment, the handover response message may include at least one information of BAP address information, default backhaul RLC channel information, default BAP routing ID, uplink/downlink TNL address information, or a mobile relay identifier for the mobile relay connected to the target donor base station. The information may be used as information for mapping F1-C traffic, F1-U traffic, and/or non-F1 traffic to the target donor base station (via a target path).

According to another embodiment, the handover response message may include radio resource configuration information for at least one of the mobile relay or the user equipment served by the mobile relay. The radio resource configuration information may include at least one of BAP address information, default backhaul RLC channel information, a default BAP routing ID, uplink/downlink TNL address information, and a mobile relay identifier for the above-described mobile relay.

According to another embodiment, the radio resource configuration information may further include time-based event condition information for triggering a conditional handover of the user equipment served by the mobile relay.

The information included in the handover response message described above may be included in the RRC container and transferred to the source donor base station.

The method of controlling the operation of the mobile relay by the source donor base station may include an operation S1030 of performing control so that radio resource configuration information is directed to at least one of the mobile relay or the user equipment.

According to an embodiment, the source donor base station may transmit the RRC container received from the target donor base station to at least one of the mobile relay and the user equipment to transfer the radio resource configuration information.

The radio resource configuration information may be transmitted to the mobile relay via RRC connection reconfiguration messages. When having received the RRC connection reconfiguration message, the mobile relay may perform a random access procedure to the target donor base station to initiate a handover procedure.

In addition, the user equipment served by the mobile relay may be established to skip the random access procedure when executing the handover. That is, the user equipment served by the mobile relay may be configured not to perform the random access procedure even in the case that the mobile relay performs the random access procedure for a handover to the target donor base station.

The mobile relay may broadcast mobile relay support information for cell reselection of the user equipment. For example, the mobile relay may periodically or aperiodically transmit system information including cell information provided by the mobile relay, information requested for accessing the mobile relay, and the like.

According to an embodiment, these operations allow the handover operation of the mobile relay to be performed and the operation of the user equipment served by the mobile relay to be supported without interruption.

In the following, the above-described operation will be described again from the perspective of the target donor base station.

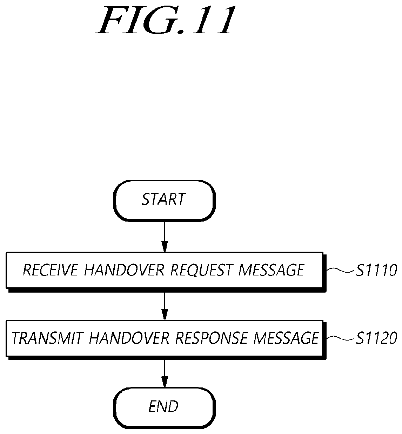

FIG. 11 is a flowchart illustrating operation of a target donor base station according to an embodiment.

Referring to FIG. 11, the method is to control operation of a mobile relay by the target donor base station. The method may include an operation S1110 of receiving a handover request message from the source donor base station.

According to an embodiment, the source donor base station may determine whether or not to hand over the mobile relay or the user equipment served by the mobile relay. The target donor base station may receive, from the target donor base station which is the target of the handover, the handover request message to request the mobile relay or the user equipment served by the mobile relay be handed over. The handover request message may be an RRC message.

The handover request message may include information requested by the mobile relay or the user equipment served by the mobile relay to be handed over to the target donor base station.

According to an embodiment, the handover request message may include an RRC container (e.g., a handover preparation message) having information requested by the target side to prepare for handover.

According to another embodiment, the handover request message may include at least one of handover indication information of the mobile relay, cell indication information of the cell being served by the mobile relay, and user equipment context information for the user equipment being served by the mobile relay.

According to an embodiment, the handover indication information of the mobile relay may include at least one of MT handover indication information of the mobile relay or DU migration indication information of the mobile relay. According to another embodiment, the cell indication information being served by the mobile relay may include at least one of cell indication information being served by a DU of the mobile relay or cell indication information provided by the mobile relay.

According to another embodiment, the handover request message may include at least one of BAP address information of the moving mobile relay, TNL address information (e.g., IP address information for the mobile relay and/or uplink/downlink transport-layer-address/IP-address or GTP-TEID(s) for mobile-relay-user-plane-traffic/F1-U-traffic), or a mobile relay identifier.

According to an embodiment, the handover indication information of the mobile relay may include information directing that the handover is for the mobile relay. Accordingly, the target donor base station/IAB-donor-CU may recognize that the handover is for the mobile relay and process accordingly.

In addition, the handover request message may include information and requests desired in the handover process of the mobile relay or the user equipment served by the mobile relay, as described in the following detailed embodiments.

The method of controlling the operation of the mobile relay by the target donor base station may include an operation S1120 of transmitting, to the source donor base station, a handover response message comprising radio resource configuration information for at least one of the mobile relay or the user equipment served by the mobile relay.

According to an embodiment, in response to the handover request message, the target donor base station may perform acceptance control for the handover request. The target donor base station may transmit a handover response message to the source donor base station in response to the handover request in the handover request message. The target donor base station may provide an RRC configuration as a part of the handover response message.

According to an embodiment, the handover response message may include at least one information of BAP address information, default backhaul RLC channel information, default BAP routing ID, uplink/downlink TNL address information, or a mobile relay identifier for the mobile relay connected to the target donor base station. The information may be used as information for mapping F1-C traffic, F1-U traffic, and/or non-F1 traffic to the target donor base station (via a target path).

According to another embodiment, the handover response message may include radio resource configuration information for at least one of the mobile relay or the user equipment served by the mobile relay. The radio resource configuration information may include at least one of BAP address information, default backhaul RLC channel information, a default BAP routing ID, uplink/downlink TNL address information, and a mobile relay identifier for the above-described mobile relay.

According to another embodiment, the radio resource configuration information may further include time-based event condition information for triggering a conditional handover of the user equipment served by the mobile relay.

The information included in the handover response message described above may be included in the RRC container and transferred to the source donor base station. That is, the radio resource configuration information may be directed to at least one of the mobile relay or the user equipment by the source donor base station.

According to an embodiment, the source donor base station may transmit the RRC container received from the target donor base station to at least one of the mobile relay and the user equipment to transfer the radio resource configuration information.

The radio resource configuration information may be transmitted to the mobile relay via RRC connection reconfiguration messages. When having received the RRC connection reconfiguration message, the mobile relay may perform a random access procedure to the target donor base station to initiate a handover procedure.

In addition, the user equipment served by the mobile relay may be established to skip the random access procedure when executing the handover. That is, the user equipment served by the mobile relay may be configured not to perform the random access procedure even in the case that the mobile relay performs the random access procedure for a handover to the target donor base station.

The mobile relay may broadcast mobile relay support information for cell reselection of the user equipment. For example, the mobile relay may periodically or aperiodically transmit system information including cell information provided by the mobile relay, information requested for accessing the mobile relay, and the like.

According to an embodiment, these operations allow the handover operation of the mobile relay to be performed and the operation of the user equipment served by the mobile relay to be supported without interruption.

In the following, detailed embodiments of the mobile relay access control operation and detailed embodiments of the mobile relay handover operation will be described in more detail. The operations described below may be performed by the source donor base station, the target donor base station, and the mobile relay described above.

### mobile Relay Access Control

The mobile relay is requested to identify cells which support the mobile relay and connect to a base station/donor base station which support corresponding functionality. To reduce complexity, it may be desirable to configure the mobile relay as a single hop. In this regard, it may be requested to prevent other mobile relays or IAB-MTs from accessing the cell provided by the mobile relay.

In this regard, mobile relay support information may be defined and broadcast via system information (e.g., SIB1). Further, information for directing which cell is served by the mobile relay may be defined and broadcast via system information (e.g., SIB1). The information may be provided according to the PLMN and/or according to the NPN.

For example, the mobile relay support information may be defined and broadcast via system information (e.g., SIB1). If the user equipment is a mobile relay (or mobile relay MT/UE) and/or corresponding information (e.g., the mobile relay support information) is not provided for a selected PLMN, if a PLMN is not a registered PLMN, if the PLMN is not a PLMN in the equivalent PLMN list, if a SNPN is not a selected SNPN, and/or if the SNPN is not a registered SNPN, the corresponding cell may be considered to be barred. If this information/field is present, the cell supports the mobile relay and the cell may be considered to be a candidate for cell (re)selection for the mobile relay. If this information/field is absent, the cell does not support the mobile relay and/or the cell is barred for the mobile relay. The corresponding information may be defined and broadcast as information different from information (iab-support) directing IAB support of the related art.

In another example, information directing the cell served by the mobile relay may be defined and broadcast via system information.

If the user equipment is a mobile relay (or mobile relay MT/UE or IAB-MT) and/or corresponding information (e.g., information for directing the cell provided by the mobile relay) is provided for a selected PLMN, if a PLMN is not a registered PLMN, if the PLMN is not a PLMN in the equivalent PLMN list, if a SNPN is not a selected SNPN, and/or if the SNPN is not a registered SNPN, the corresponding cell may be considered to be barred. If this information/field is present, the cell directs that the cell is served by the mobile relay. Furthermore, the cell may not be considered to be a candidate for cell (re)selection for the mobile relay (or mobile relay MT/UE or IAB-MT). The cell is barred for the mobile relay.

If this information/field is absent, the cell is not the cell served by the mobile relay, and the cell may be considered to be a candidate for cell (re)selection for the mobile relay.

In another example, to configure the mobile relay as a single hop, the mobile relay may not broadcast the information (iab-support) directing the IAB support in the cell in which the mobile relay provides an access/service. The information directing the IAB support directs the IAB support and the cell status with respect to the IAB. If this information/field is present, the cell supports the IAB. The cell may be considered to be a candidate for cell (re)election for the IAB node. Therefore, to prevent descendent IAB nodes from contacting the mobile relay, the cell served by the mobile relay may configure the information directing the IAB support not to be broadcast in the system information.

If the user equipment is a mobile relay (or mobile relay MT/UE) and/or corresponding information (e.g., IAB-support) is provided for a selected PLMN, if a PLMN is not a registered PLMN, if the PLMN is not a PLMN in the equivalent PLMN list, if a SNPN is not a selected SNPN, and/or if the SNPN is not a registered SNPN, the corresponding cell may be considered to be barred. If this information/field is present, the cell directs that the cell supports the IAB. The cell may be prevented from being considered to be a candidate for cell (re)selection for the mobile relay (or mobile relay MT/UE). The cell is barred for the mobile relay.

If this information/field is absent, the cell is not the cell served by the mobile relay, and the cell may be considered to be a candidate for cell (re)selection for the mobile relay.

In another example, the mobile relay may include IAB-DU/IAB-MT functionalities. Therefore, it may be desirable to perform access control together with the IAB having base station functionality.

In an example, the mobile relay (or mobile relay MT/UE) may be configured to ignore cell-barring or cell-reservation indication information included in the cell system information broadcast.

The mobile relay (or mobile relay MT/UE) may ignore the cell-barring indication information (cellBarred: (IE type: "barred" or "not barred") and cell-reservation indication information (cellReservedForOperatorUse: (IE type: "reserved" or "not reserved"), cellReservedForOtherUse: (IE type: "true"), and cellReservedForFutureUse: (IE type: "true")).

In another example, the mobile relay (or mobile relay MT/UE) may be configured to ignore intra-frequency reselection (intraFreqReselection) indication information. For example, processing may be performed as if the intrafrequency reselection is set to be allowed. This information represents information for controlling the cell selection/reselection when the highest ranked cell is barred or processed as barred.

In another example, unified access control as defined in TS38.331 may not be enforced for the mobile relay (mobile relay MT/UE).

In another example, the mobile relay may include IAB-DU/IAB-MT functionality for relaying. However, the primary use case is single-hop relaying for in-vehicle user equipment rather than related-art IAB used for ad hoc network deployment. Therefore, the number of user equipment served by the mobile relay may not be greater than that of the related-art IAB. In contrast, the number of mobile relays connected within a particular donor base station may be quite large. Therefore, it may be desirable to perform access control by considering the mobile relay closer to the user equipment than to the base station.

The mobile relay may be configured to process the cell status or the cell reservation indication information in the same manner as in normal user equipment. The mobile relay (or mobile relay MT/UE) may cause at least one of the cell-barring indication information (cellBarred: (IE type: "barred" or "not barred")) or the cell-reservation indication information (cellReservedForOperatorUse: (IE type: "reserved" or "not reserved"), cellReservedForOtherUse: (IE type: "true"), and cellReservedForFutureUse: (IE type: "true")) included in the cell system information broadcast to be processed in the same manner as in normal user equipment.

In an example, in case that the user equipment is the mobile relay and/or the cell status is indicated as "not barred" and/or "not reserved" for operator use, not "true" for other uses, and/or not "true" for future use, the user equipment may consider this cell to be a candidate during cell selection and cell reselection procedures.

In another example, in case that cell status is indicated as "true" for future use, the user equipment may consider this cell as if the cell status is "barred".

In another example, in case that the user equipment is the mobile relay, and/or the cell status is indicated "not barred" and "reserved" for operator use for any PLMN/SNPN, not "true" for other use, and not "true" for future use, the mobile relay may consider the cell as a candidate cell during the cell (re)selection procedure even if indication is the field cellReservedForOperatorUse for that PLMN set to "reserved". As another example, in case that the user equipment is the mobile relay and the cell status is indicated "not barred" and "reserved" for operator use for any PLMN/SNPN, not "true" for other use, and not "true" for future use, the mobile relay may consider the cell as barred (and may act as if the cell were barred) if indication is the field cellReservedForOperatorUse for that PLMN set to "reserved".

In another example, the mobile relay may be configured to process intra-frequency reselection indication information in the same manner as in normal user equipment. For example, if the intra-frequency reselection information/field is set to not allowed, the mobile relay may not reselect another cell at the same frequency as a barred cell. Such cells may be excluded from candidates for cell selection/reselection for a period of time (e.g., 300 seconds).

In another example, unified access control may be enforced for the mobile relay (mobile relay MT/UE). Unified access control may be enforced when the mobile relay performs IAB-node integration procedures, for example, when performing IAB-MT setup of the mobile relay. In another example, when the mobile relay performs RRC connection configuration/setup procedure, standardized access categories for the mobile relay may be processed, e.g., specified/defined/divided. The mobile relay may map the type of request to one or more access identifiers and one access category. This may then be directed to a lower layer (e.g., AS(RRC)). The lower layer (RRC) of the user equipment performs an access barring check on the request based on the determined access identifier and access category. The NAS/upper layer of the mobile relay may map an access attempt from the user equipment to a particular access category to be directed to the RRC. In another example, the access control may be performed by designating an access attempt for the mobile relay by at least one of reserved standardized access category numbers. In another example, for mobile relay capability, user equipment which is stored, directed, and/or configured with mobile relay user equipment capability via subscription information, or user equipment which is authenticated by the mobile relay via NAS signaling, access control may be performed by designating the access attempt of the user equipment by at least one of the reserved standardized access category numbers. In another example, assignment for access control may be performed by designating at least one of 11 to 31 values reserved for standardized access categories.

In another example, access control may be performed by designating at least one of the standardized access identifier numbers for the mobile relay. For example, one of 3 to 10 values reserved for standardized access identifiers may be assigned to the mobile relay, the user equipment configured with mobile relay capability, and/or the user equipment configured for mobile relay service. The USIM file (of the user equipment) may direct that the user equipment is configured with the corresponding access identifier. When the user equipment is in an HPLMN or in an EHPLMN, the contents of the USIM file may be used to determine the applicability of the access identifier.

The user equipment may use the corresponding indicator bit of the 5GS network support IE to determine whether the corresponding access identifier is valid. The corresponding indicator bit of the 5GS network support IE may be included in a registration accept message and directed to the user equipment. In another example, access control of the access attempt for the mobile relay may be performed using operator-defined access categories or operator-defined access identifier numbers.

In addition, the user equipment served by the mobile relay may also perform integrated access control. Therefore, the mobile relay does not need to perform integrated access control to relay data of the mobile relay user equipment.

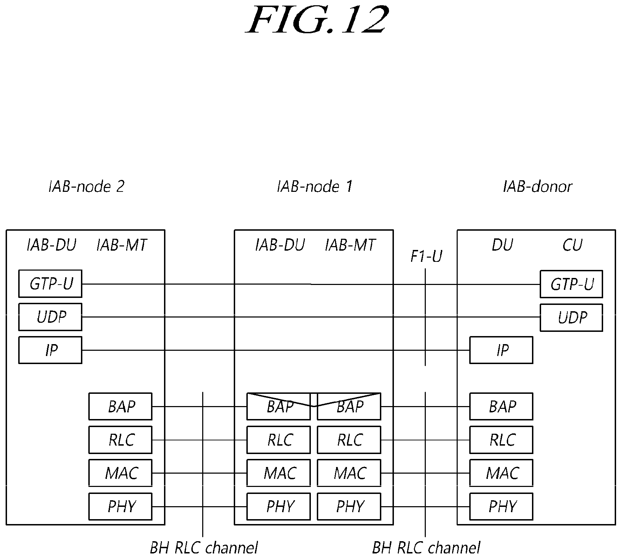

FIG. 12 is a diagram illustrating an example of an F1-U protocol stack. Referring to FIG. 12, a protocol structure for transmitting user plane data through the IAB node may be shown. In a wireless backhaul, an IP layer was carried over a backhaul adaptation protocol (BAP) layer which enables routing over multiple hops. As such, the related-art IAB has been assumed to have a multi-hop based structure, and complex routing had to be supported.

To reduce complexity, the mobile relay may be provided through a single-hop structure. For example, the mobile relay may not have a descendant IAB node. The mobile relays may be directly connected to an IAB-donor (or the base station/donor base station/gNB-CU. For clarity of explanation and ease of understanding, the IAB-donor may refer to the donor base station. This is for illustrative purposes only, and the donor base station may be denoted as either the IAB-donor, the base station (gNB), or gNB-CU in FIG. 12). There may be a configuration in which the intermediate IAB node (e.g., IAB-node1 in FIG. 12) is absent between the mobile relay and the donor base station.

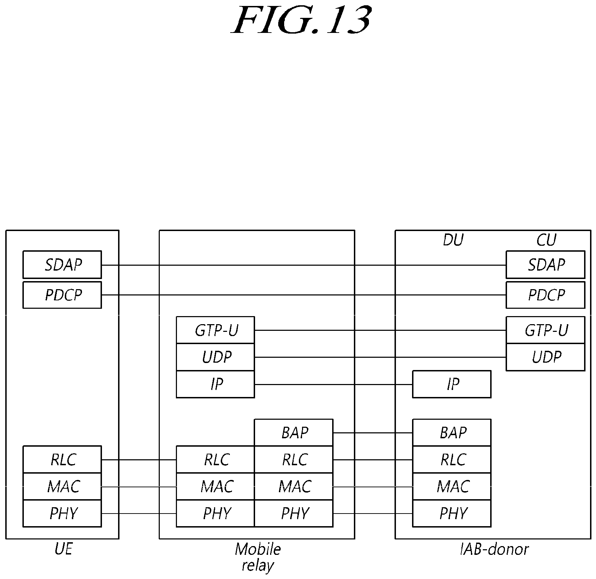

FIG. 13 is a diagram illustrating an example of a protocol stack for user equipment access which uses mobile relaying.

In an example, user plane data may be transmitted and received between the user equipment and the donor base station over an F1-U/GTP-U tunnel associated with the user equipment and the corresponding DRB (DRB-ID/RB-ID/LogicalChannelID).

In another example, the user plane data transmitted and received between the user equipment and the donor base station may include, in the BAP header, index/identification information/address information of at least one of the corresponding user equipment (UE-ID/C-RNTI/base station user equipment identifier), the corresponding DRB (DRB-ID/RB-ID/LogicalChannelID)), or the corresponding mobile relay (mobile relay identifier/base station identifier/global-NG-RAN-node-ID). Accordingly, the user data may be transmitted and received in conjunction with the backhaul RLC channel/backhaul RLC bearer without the F1-U/GTP-U tunnel. The mobile relay may transmit and receive PDCP-PDU/RLC-SDU/RLC-PDU received from the user equipment in conjunction with the backhaul RLC channel/backhaul RLC bearer between the mobile relay and the donor base station. The mobile relay may allow RLC-SDU/BAP-PDU/BAP-SDU received from the donor base station to be transmitted and received in conjunction with the RLC channel/RLC bearer between the user equipment and the mobile relay.

Information for configuring the above may be directed to the mobile relay via an F1AP message or an RRC message and thus the above may be configured. The information identifying the user equipment described above may be information assigned by the mobile relay to identify the user equipment. As another example, the information identifying the user equipment may be information assigned by the donor base station to identify the user equipment. The information identifying the user equipment may be included and directed in an RRC setup message, an RRC reconfiguration message, and an RRC reestablishment message.

An adaptation protocol (e.g., a BAP or an adaptation protocol for supporting mobile relaying different from the BAP) may include, in the adaptation protocol header, information of at least one of a corresponding user equipment identifier, a DRB identifier for the corresponding user equipment, or a mobile relay identifier which provides access/service to the corresponding user equipment.

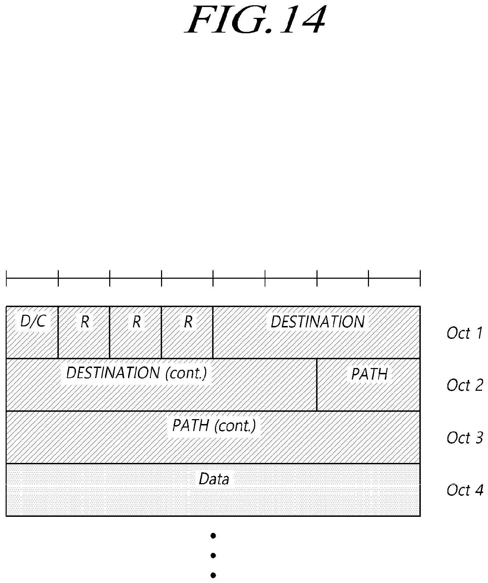

FIG. 14 is a diagram illustrating an example of a BAP data PDU format. Referring to FIG. 14, for example, when using the BAP PDU format, the BAP PDU format may be different from the related-art format by using/changing the R field(s). The corresponding adaptation protocol header may include information of at least one of a corresponding user equipment identifier, a DRB identifier for the user equipment, and a mobile relay identifier which provides access to the user equipment.

For clarity of explanation and ease of understanding, a method of adjusting mobile relay handover/topology and/or handing over (a single or plurality of pieces of) the user equipment served by the mobile relay will be described based on FIG. 13. This is for convenience only, and the disclosure also includes changing the adaptation protocol header without the F1-U/GTP-U tunnel.

One or more of user equipment are on board a vehicle on which a mobile relay is mounted. As the vehicle moves, the mounted mobile relay and the user equipment served by the mobile relay may move together. To support the mobility of the mobile relay, handover, migration, and/or topology adaptation procedures for the mobile relay and/or handover procedures for the user equipment (e.g., a single or plurality of pieces of user equipment) served by the mobile relay may be provided.

For example, a mobile relay MT handover may be performed, in which an MT of the corresponding mobile relay performs a wireless backhaul/cell change which serves the mobile relay MT. Mobile relay DU migration may be performed, in which the DU of the corresponding mobile relay or the user equipment served by the DU of the mobile relay changes the donor base station/CU.

In the following, the handover, migration, and/or topology adjustment of the mobile relay refers to the handover of the mobile-IAB-MT served by the mobile relay and/or the migration of the mobile-IAB-DUs served by the mobile relay. The handover of the mobile-IAB-MT results in a change of parent nodes serving the mobile-IAB-MT (or the wireless backhaul/cell provided by the parent nodes). The execution of the handover for the mobile-IAB-MT may change the donor base station/CU which manages, controls, and/or configures radio resources for the mobile-IAB-MT (e.g., the source donor base station/CU -> the target donor base station/CU). The migration of the mobile-IAB-DU may result in a change of the donor base station/CU (e.g., the source donor base station/CU -> the target donor base station/CU) of the DU of the corresponding mobile relay or the user equipment served by the DU of the mobile relay (e.g., the source donor base station/CU -> the target donor base station/CU). To execute the handover of the user equipment served by the mobile relay during the migration of the mobile-IAB-DU, the mobile relay may configure and/or form two logical mobile relay DUs having F1AP association with the source donor base station/CU and the target donor base station/CU, respectively.

During the migration of the mobile-IAB-DU, the user equipment (e.g., a single or plurality of pieces of user equipment) served by a single mobile-IAB-DU provided by the corresponding mobile relay may be handed over to another mobile-IAB-DU provided by the mobile relay. In the migration process of the mobile-IAB-DU, the user equipment served by a cell served by the mobile-IAB-DU provided by the mobile relay may be handed over to another cell served by the mobile-IAB-DU. The handover of the mobile-IAB-MT and the migration of the mobile-IAB-DU may be executed in conjunction with each other. The handover of the mobile-IAB-MT and the migration of the mobile-IAB-DU may be executed independently.

### Mobility Control of Mobile Relay and User Equipment Served by Mobile Relay

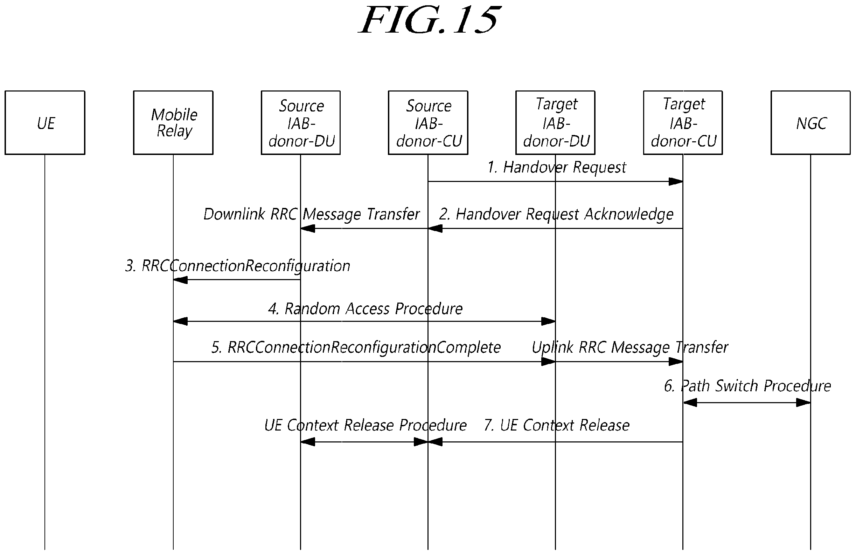

FIG. 15 is a diagram illustrating an example of an Inter IAB-donor-CU topology adaptation procedure.

Referring to FIG. 15, a procedure for providing topology adjustment by handing over the mobile relay through different donor base stations/IAB-donor-CUs is illustrated. For clarity of explanation and ease of understanding, the procedure is described in a base station separation structure in which the base station/donor base station is comprised of a CU/IAB-donor-CU and a DU/IAB-donor-DU. However, this is only for clarity of explanation and ease of understanding, and it is apparent that the disclosure also includes cases in which the CU/IAB-donor-CU and the DU/IAB-donor-DU included in the base station or the donor base station are implemented as a single node, a logical entity, and/or a physical entity.

The mobile relay may switch an RRC connection and/or a data wireless bearer for signaling and data traffic of the mobile relay itself. The RRC connection and/or the data wireless bearer of the mobile relay may be changed from a previous donor base station/IAB-donor-CU/IAB-donor-DU/parent node to a new donor base station/IAB-donor-CU/IAB-donor-DU/parent node. The RRC connection and/or the data wireless bearer for the signaling and data traffic generated by the mobile relay MT itself may be changed from the previous donor base station/IAB-donor-CU/IAB-donor-DU/parent node to the new donor base station/IAB-donor-CU/IAB-donor-DU/parent node. F1-U data traffic generated by the user equipment served by the mobile relay DU may be changed from the previous donor base station/IAB-donor-CU/parent node to the new donor base station/IAB-donor-CU/parent node.

For clarity of explanation and ease of understanding, the previous donor base/IAB-donor-CU/IAB-donor-DU/parent node is denoted as the source donor base/IAB-donor-CU/IAB-donor-DU/parent node. The new donor base/IAB-donor-CU/IAB-donor-DU/parent node is also denoted as the target donor base/IAB-donor-CU/IAB-donor-DU/parent node.

Respective operations will be described with reference to FIG. 15.
1. The source donor base station/IAB-donor-CU transmits a handover request message to target donor base station/IAB-donor-CU.

The handover request message may include an RRC container (e.g., a handover preparation message) having information requested by the target side to prepare for handover. The handover request message or the RRC container may include information of at least one of BAP address information of the moving mobile relay, default backhaul RLC channel information, default BAP routing ID, uplink/downlink TNL address information (e.g., IP address information for the mobile relay and/or uplink/downlink transport-layer-address/IP-address, GTP-TEID(s) for mobile-relay-user-plane-traffic/F1-U-traffic), and a mobile relay identifier. The information may be used to map and transmit data traffic (e.g., F1-U) of the user equipment served by the corresponding mobile relay, F1-C traffic for the corresponding mobile relay DU, and non-F1 traffic for the corresponding mobile relay MT. For example, the F1-C/F1-U traffic by the mobile relay DU and the non-F1 traffic by the mobile relay MT may be transmitted from the mobile relay to the source donor base station/IAB-donor-CU.

The handover request message may include information directing that the handover is for the mobile relay (or information directing the support of the mobile relay). In an example, information directing that the user equipment is authenticated by the mobile relay (mobile relay MT) may be included. Such information may be received from the core network node. In another example, information directing that the handover is for the mobile relay DU migration may be included. The target donor base station/IAB-donor-CU may recognize that the handover is for the mobile relay and process the handover.

The handover request message may include information for supporting, providing, and/or directing mobility for the user equipment served by the corresponding mobile relay (e.g., the user equipment that has access to the mobile relay and is in an RRC connection state). This will be described later. For example, when the handover/topology adjustment of the mobile relay is performed, processing (e.g., physical cell ID (PCI) change of the mobile relay serving cell, handover/cell change/RRC reestablishment of the user equipment served through the cell based on the PCI change, PDCP recovery or PDCP reestablishment of the user equipment served by the mobile relay based on the change/switching of the backhaul link between the mobile relay and the donor base station) for providing service continuity to the user equipment served by the mobile relay may be performed at a same time or in conjunction therewith.

2. The target donor base station/IAB-donor-CU may perform acceptance control. For example, if the handover contains information directing that the handover is for the mobile relay (or information directing that the mobile relay is supported), the target donor base station/IAB-donor-CU may control and/or reject the handover to a cell which does not support the mobile relay.

The target donor base station/IAB-donor-CU may transmit a handover request acknowledgment/response message to the source donor base station/IAB-donor-CU. The RRC configuration may be provided using part of the handover request acknowledgment/response message. The handover request acknowledgment/response message or the RRC configuration may include information of at least one of BAP address information, default backhaul RLC channel information, default BAP routing ID, uplink/downlink TNL address information, and a mobile relay identifier for the mobile relay connected to the target donor base station/IAB-donor-CU. This information may be used as information for mapping F1-C traffic, F1-U traffic, and/or non-F1 traffic to the target donor base station/IAB-donor-CU (via a target path).

For example, the BAP address information, the default backhaul RLC channel information, and the default BAP configuration information configured on the mobile relay MT may be used to transmit the F1-C/F1-U traffic by the mobile relay DU and the non-F1 traffic by the mobile relay MT to the corresponding donor base station/IAB-donor-CU. If the corresponding mobile relay provides one or more DUs for the mobile relay DU migration, the BAP address information, default backhaul RLC channel information, and default BAP configuration information configured on the corresponding mobile relay MT may be used to transmit the F1-C/F1-U traffic by the corresponding one or more mobile relay DUs and the non-F1 traffic by the mobile relay MT to the corresponding donor base station/IAB-donor-CU. If the corresponding DU has not been reconfigured by the F1AP after the configuration of corresponding default backhaul RLC channel information and default BAP routing ID configuration information, the corresponding mobile relay selects the corresponding routing and the corresponding BAP routing ID according to the corresponding default backhaul RLC channel information and the default BAP routing ID configuration information.

The handover request acknowledgment/response message may include information for supporting, providing, and/or directing mobility for the user equipment served by the corresponding mobile relay (e.g., the user equipment that has access to the mobile relay and is in an RRC connection state). This will be described later. For example, information for supporting the processing for providing service continuity to the user equipment served by the mobile relay when the handover/topology adjustment of the mobile relay is performed may be included. (The processing may be, for example, a PCI change of the mobile relay serving cell, a handover/cell change/RRC reestablishment of the user equipment served through the cell based on the PCI change, PDCP recovery or PDCP reestablishment of the user equipment served by the mobile relay based on the change/switching of the backhaul link between the mobile relay and the donor base station.)

The source donor base station/IAB-donor-CU may include and/or encapsulate at least one corresponding RRC message/container in the downlink RRC message transfer message and transmit the downlink RRC message transfer message to the source IAB-donor-DU.

In case that the processing (e.g., PCI change of the mobile relay serving cell, handover/cell change/RRC reestablishment of the user equipment served through the cell based on the PCI change, PDCP recovery or PDCP reestablishment of the user equipment served by the mobile relay based on the change/switching of the backhaul link between the mobile relay and the donor base station) for providing service continuity to the user equipment served by the mobile relay when performing the handover/topology adjustment of the mobile relay is supported, the source donor base station/IAB-donor-CU may include and/or encapsulate at least one corresponding RRC message/container in the downlink RRC message transfer message and transmit the downlink RRC message transfer message to the mobile relay (or the mobile relay DU).

3. The source donor base station/IAB-donor-CU/IAB-donor-DU may transmit the received RRC reconfiguration message to the mobile relay.
4. The mobile relay may perform random access procedures for the target donor base station/IAB-donor-DU.
5. The mobile relay may transmit an RRC reconfiguration complete message to the target donor base station/IAB-donor-DU/IAB-donor-CU. The target IAB-donor-DU may include and/or encapsulate the RRC message in an uplink RRC message transfer message and transmit the uplink RRC message transfer message to the target donor base station/IAB-donor-CU.
6. The target donor base station/IAB-donor-CU may perform a path switch procedure with the core network (e.g., AMF). The target donor base station/IAB-donor-CU may send a path switch request message to the AMF. The target donor base station/IAB-donor-CU may receive a path switch request acknowledge message from the AMF. The corresponding path switch procedure may represent a change in the data wireless bearer path for data traffic of the mobile relay itself (e.g., a change from a data transmission path from the core network to the source donor base station to a data transmission path from the core network to the target donor base station).
7. The target donor base station/IAB-donor-CU may transmit a user equipment context release request message to the source donor base station/IAB-donor-CU.

The source donor base station/IAB-donor-CU may transmit an F1AP message to the source IAB-donor-DU to direct the user equipment context to be released.

The source IAB-donor-DU may release the context of the mobile relay and may transmit a message to the source donor base station/IAB-donor-CU to direct the source donor base station/IAB-donor-CU to complete the release of the user equipment context.

The source donor base station/IAB-donor-CU/IAB-donor-DU may release backhaul RLC channels and BAP layer root entries on the source path between the mobile relay, the source donor base station/IAB-donor-CU/IAB-donor-DU.

Upon completion of the handover for the mobile relay MT, the source donor CU receives information regarding the corresponding handover from the target donor CU. After the mobile relay MT handover is completed, the source donor CU may send information about the target donor CU of the mobile relay MT to the donor CU of the corresponding mobile relay DU (e.g., to the source donor CU if the DU migration did not occur, or to the target donor CU if the DU migration occurred together).

In another example, in the handover/topology adjustment procedures for the mobile relay, (when the mobile relay receives the RRC reconfiguration message) the mobile relay may connect to the cell provided by the target donor base station/IAB-gNB-CU without detaching from the cell provided by the source donor base station/IAB-gNB-CU (or while maintaining the wireless link/connection between the mobile relay and the source donor base station/IAB-gNB-CU). When the mobile relay receives an explicit release direction from the target donor base station/IAB-gNB-CU (or from the source donor base station/IAB-gNB-CU), the mobile relay may release the resources and configurations of the source donor base station/IAB-gNB-CU and stop uplink/downlink transmission and/or reception to and/or from the source donor base station/IAB-gNB-CU. The mobile relay may continue the uplink/downlink transmission and/or reception to and/or from the source donor base station/IAB-gNB-CU until an explicit release indication is received. The source donor base station/IAB-gNB-CU (or RRC) may suspend subsequent handover/topology adjustment until the cell provided by the source donor base station/IAB-gNB-CU is released.

Here, the explicit release indication may be directed via corresponding indication information in the RRC reconfiguration message or the F1AP message. Upon receiving the corresponding indication information, the mobile relay may perform at least one of reestablishing a source MAC, unconfiguring the source MAC, releasing an RLC entity, releasing a backhaul RLC entity, releasing a PDCP, unconfiguring a physical channel, releasing a BAP entity, releasing a BAP routing entry (e.g., a BAP routing ID, a BAP address, or a BAP path ID) (configured by the source path or the source donor base station/IAB-gNB-CU), and releasing uplink/downlink TNL information (configured by the source path or the source donor base station/IAB-gNB-CU) in the cell provided by the source donor base station.

As another example, in case that a handover command for the mobile relay includes information directing that the handover of the user equipment served by the mobile relay is to be performed together, if the corresponding RRC reconfiguration message (reconfiguration with sync) is received, the mobile relay may perform at least one of reestablishing a source MAC, unconfiguring the source MAC, releasing an RLC entity, releasing a backhaul RLC entity, releasing a PDCP, unconfiguring a physical channel, releasing a BAP entity, releasing a BAP routing entry (e.g., a BAP routing ID, a BAP address, or a BAP path ID) (configured by the source path or the source donor base station/IAB-gNB-CU), and releasing uplink/downlink TNL information (configured by the source path or the source donor base station/IAB-gNB-CU) in the cell provided by the source donor base station.

A serving cell served by a mobile relay may move in response to the movement, cell change, handover, and/or topology adjustment of the mobile relay. A moving cell may cause PCI conflict issues. For example, PCI collision and/or PCI confusion may occur when two cells having the same PCI are neighboring cells. This may cause synchronization signal conflicts, wireless link failures, handover failures, contention in RACH attempts, and the like. If each cell is assigned only PCIs within a given area, none of these issues may occur. The donor base station/IAB-donor-CU may detect, predict, and/or estimate the PCI collision/PCI confusion/RACH-contention.

The mobile relay may change PCI information and/or PRACH configuration information of the cell being served by the mobile relay. The mobile relay may change the system information of the cell served by the mobile relay by updating the system information.

For example, at any point in time, the mobile relay may change the PCI information and/or the PRACH configuration information of the cell being served. The donor base station serving the mobile relay may learn about cell global ID (CGI) information and physical cell ID (PCI) information of cells served by the donor base station, cells served by the mobile relay, and cells served by neighboring base stations.

In an example, the donor base station manages a neighbor cell relation table (NCRT) by an automatic neighbor cell relation (ANR) function. A neighbor detection function (NDF) located within the ANR may find neighbors through measurement reports from the user equipment and add to the found neighbors to the NCRT. The donor base station may determine the target cell which is identified by the source cell.

In another example, the donor base station may receive report information about random access procedures through RACH reports from the user equipment. The donor base station may receive content related to wireless link failures through RLF reports from the user equipment of the donor base station. From this information, the mobile relay/donor base station/user equipment may learn about the cell information of the source cell or the neighboring cells and the RACH/PRACH configuration and the related failure information in the corresponding cell.

In another example, when detecting, predicting, and/or estimating a PCI/RACH conflict, the mobile relay may transmit, to the donor base station for the cell served by the mobile relay, information of at least one of: CGI; current PCI/system information requested to be changed; PCI/system information to be changed; PRACH configuration information which has been changed and/or which is to be changed; information for requesting, directing, and/or notifying a change of the PCI information, the PRACH configuration, and/or the system information; and detected RACH failure information. The donor base station may direct the mobile relay to change the PCI, PRACH configuration, and/or system information of the cell served by the mobile relay. Here, an example of the PRACH configuration may include at least one information of RACH-ConfigCommon of the clause 9.3.1.140 of TS 38.473 or the clause 6.3.2 of TS 38.331.

In another example, when detecting, predicting, and/or estimating a PCI/RACH conflict, the donor base station may transmit, to the mobile relay, information of at least one of: a CGI; a current PCI/PCI-set requested to be changed; PCI/PCI-set/available-PCI-list/system information which is to be changed, which may be changed, and/or which is recommended; PRACH configuration information of neighboring cells; and recommended PRACH configuration information. The mobile relay may consider the received information when adjusting the PCI/PRACH configuration/system information of the served cell. Upon receiving the corresponding message and/or when the PCI/PRACH configuration/system information of the cell provided by the mobile relay is changed, the mobile relay may transmit a corresponding acknowledgment/response/notification message. The message may include information of at least one of the CGI, the current PCI requested to be changed, the PCI/system information which has been changed and/or is to be changed, and the PRACH configuration information which has been changed and/or is to be changed.

In another example, when the mobile relay performs the handover/topology adjustment for the mobile relay via different donor base stations/IAB-donor-CUs, the PCI/system information for the cell being served by the mobile relay may be changed (at a same time or in conjunction).

The source donor base station/IAB-donor-CU and/or the target donor base station/IAB-donor-CU may detect, predict, and/or estimate a PCI/RACH conflict for the cell served by the mobile relay for which the handover/topology adjustment is performed during the handover/topology adjustment.

In an example, the handover request message may include at least one of information directing that the user equipment to perform the handover is the mobile relay, information identifying the cell being served by the mobile relay (e.g., CGI or PCI), information about any cell configuration of the corresponding cell (e.g., RACH/PRACH configuration information), information directing whether or not the cell is served by the mobile relay, information directing/requesting that any configuration information (e.g., PCI/system information) of the corresponding cell be changed, and/or information directing/requesting that any configuration information (e.g., PCI, system information) of the corresponding cell be changed at a same time as (or in conjunction with) the handover/topology adjustment of the mobile relay.

In another example, when receiving at least one of the above-described information from the source donor base station/IAB-donor-CU and/or when detecting, predicting, and/or estimating a PCI/RACH conflict in the target donor base station/IAB-donor-CU, the source donor base station/IAB-donor-CU or the target donor base station/IAB-donor-CU may generate and/or determine a configuration for directing, processing, and/or responding to the PCI/RACH conflict.

In another example, the target donor base station/IAB-donor-CU may detect, predict, and/or estimate the PCI/RACH conflict and perform admission control for handover. As another example, the target donor base station/IAB-donor-CU may detect, predict, and/or estimate the PCI/RACH conflict. If requested, information of at least one of: a CGI about a cell served by the corresponding mobile relay; a current PCI/PCI-set requested to be changed; PCI/PCI-set/available-PCI-list/system information which is to be changed, which may be changed, and/or which is recommended; PRACH configuration information of neighboring cells; and recommended PRACH configuration information may be included and transmitted in any operation of processing the handover procedure.

For example, the handover request acknowledgement/response message (or the handover preparation failure message) may include information of at least one of: a CGI; a current PCI/PCI-set requested to be changed; PCI/PCI-set/available-PCI-list/system information which is to be changed, which may be changed, and/or which is recommended; PRACH configuration information of neighboring cells; and recommended PRACH configuration information. Any corresponding information may be provided according to the cell (e.g., CGI). As another example, such information may be provided as common information for the corresponding mobile relay (e.g., the DU in the corresponding mobile relay).

In another example, the mobile relay may change PCI information for the cell being served by the mobile relay. The mobile relay may broadcast information via system information to direct, notify, and/or anticipate the PCI change and/or the cell change of the cell (or the handover of the user equipment served by the mobile relay). The system information may include at least one of a CGI, a current PCI requested to be changed, a PCI to be changed, and PCI change/cell change timing information for the cell served by the mobile relay. The PCI change/cell change timing may direct a time, a time point, moment, a time range, and/or a duration (start time + offset/duration/elapsed time or start time + end time) where the PCI change is expected, planned, anticipated, initiated, triggered, and/or applied (or the cell is going to stop serving).

For example, the time, the time range, and/or the duration may be directed as an absolute time, a coordinated universal time (UTC, timeInfoUTC), and/or an offset/duration/elapsed time. (For example, the field counts the number of UTC seconds in 10 ms units since 00:00:00 on Gregorian calendar date 1 January, 1900 (midnight between Sunday, December 31, 1899 and Monday, January 1, 1900). As another example, the time, the time range, and/or the duration may be denoted as a start SFN, a start surf-frame number, a start slot offset, and an offset/duration/elapsed time (ms, number of slots). As another example, the corresponding time may be directed that in a particular reference time (e.g., a reference SFN, a reference surf-frame number, a reference slot offset, or a reference UTC), the corresponding cell change is performed at an expected, planned, anticipated, started, triggered, applied offset, duration, and/or elapsed time (in ms, number of slots).

In another example, the donor base station/IAB-donor-CU/mobile relay may notify and/or direct the PCI change/cell change, the system information change described above, and/or the related system information change by paging messages. This may be notified and/or directed, for example, by a short message which is transmitted with a P-RNTI via DCI. The paging message may include information directing this. Upon receipt of such a message, the user equipment may cause handover/RRC reestablishment to be performed to the cell having the changed PCI. The user equipment may transmit acknowledgment information about the receipt of the message to the mobile relay. The acknowledgment information may be provided via any L1 signaling (e.g., any L1 signaling of such as UCI, HARQ ACK), L2 signaling (e.g., any L2 signaling of such as MSG1, MAC CE, RLC ACK), and/or L3 signaling (e.g., RRC messaging).

In another example, the mobile relay may notify and/or direct a PCI change/cell change, a related system information change, and/or a related system information change via a user equipment-specific RRC-only message (e.g., RRC reconfiguration message).

In another example, the target donor base station/IAB-donor-CU may notify and/or direct the PCI change/cell change, the above-described system information change, and/or the related system information change for the cell served by the mobile relay via an F1AP message to the mobile relay. Such an F1AP message may be transmitted via a non-user equipment associated F1AP message.

In another example, the PCI of the cell being served by the mobile relay may be changed due to the movement, cell change, handover, and/or topology adjustment of the mobile relay. The mobile relay may change the PCI/system information of the cell, which is being served, by updating the system information or the like. Accordingly, RRC inactive user equipment may perform RAN notification area update to the cell which is being served by the mobile relay. The RRC inactive user equipment is configured to include at least one of a cell list including RAN areas or a RAN area code list including RAN areas in RAN notification area information. The RRC inactive user equipment may initiate RAN notification area update if the serving cell does not belong to the configured RAN notification area. If there is many RRC inactive user equipments in the cell served by mobile relay, a signaling load may be induced. In situations involving extensive signaling for the handover of the RRC-connected user equipment served by the mobile relay during the PCI change, the signaling load becomes problematic.

In an example, to address this problem, the target donor base station/IAB-donor-CU or the source donor base station/IAB-donor-CU may provide the user equipment served by the corresponding mobile relay with instructions to perform the RAN notification area update with a random or directed wait time, back-off time, and/or offset (in a distributed manner) via the mobile relay. The user equipment may initiate the RRC connection resume procedure according to the random or directed wait time, back-off time, and/or offset.

The related-art art handover request message specified in TS 38.423 XnAP protocol included target cell information, corresponding user equipment identification information, and user equipment context information requested for configuring a handover command (e.g. RRC reconfiguration with sync) for the user equipment. Specific examples included a source base station user equipment XnAP identifier (source NG-RAN node UE XnAP ID reference), a target cell global identifier (CGI), a globally unique AMF identifier (GUAMI), user equipment history information, global NG-RAN node ID included in the user equipment context reference, S-NG-RAN node user equipment XnAP ID and AMF UE NGAP ID included in the user equipment context information (NG-C user equipment associated signaling reference), an AMF IP address of the SCTP association (signaling TNL association address at source NG-C side), user equipment security capabilities, AS security information, index to RAT/frequency selection priority, a user equipment aggregate maximum bit rate, information about a list of PDU session resources to be setup, a handover preparation information message (RRC context), location reporting information, and a mobility restriction list.

In an example, in the handover/topology adjustment procedure for the mobile relay, (when the mobile relay receives the RRC reconfiguration message) in case that a cell provided by the source donor base station/IAB-gNB-CU is detached (or the wireless link/connection between the mobile relay and the source donor base station/IAB-gNB-CU is disconnected or released) and only a cell provided by the target donor base station/IAB-gNB-CU is connected, the source donor base station/IAB-gNB-CU may be requested to transmit or share the user equipment context for the user equipment (e.g., a single or plurality of pieces of user equipment) served by the corresponding mobile relay to or with the target donor base station/IAB-gNB-CU, in which the user equipment context has been possessed by the source donor base station/IAB-gNB-CU.

In another example, in the handover/topology adjustment procedure for the mobile relay, (when the mobile relay receives the RRC reconfiguration message) in case that a cell provided by the source donor base station/IAB-gNB-CU is not detached (or the wireless link/connection between the mobile relay and the source donor base station/IAB-gNB-CU is maintained) and a cell provided by the target donor base station/IAB-gNB-CU is connected, the source donor base station/IAB-gNB-CU may be requested to transmit or share the user equipment context for the user equipment served by the corresponding mobile relay to or with the target donor base station/IAB-gNB-CU, in which the user equipment context has been possessed by the source donor base station/IAB-gNB-CU.

The XnAP message may cause the source donor base station/IAB-gNB-CU to transmit the user equipment context for the user equipment served by the corresponding mobile relay to the target donor base station/IAB-gNB-CU, in which the user equipment context has been possessed by the source donor base station/IAB-gNB-CU. As another example, the donor base station/IAB-gNB-CU may request and extract the information from the source donor base station/IAB-gNB-CU.

For the user equipment (e.g., a single or plurality of pieces of user equipment) served by the mobile relay, the corresponding XnAP message, for example, a handover request message, may include information of at least one of: a source base station user equipment XnAP identifier (source NG-RAN node UE XnAP ID reference), a target cell global identifier (CGI), a globally unique AMF identifier (GUAMI), user equipment history information, global NG-RAN node ID included in the user equipment context reference, S-NG-RAN node user equipment XnAP ID and AMF UE NGAP ID included in the user equipment context information (NG-C user equipment associated signaling reference), an AMF IP address of the SCTP association (signaling TNL association address at source NG-C side), user equipment security capabilities, AS security information, index to RAT/frequency selection priority, a user equipment aggregate maximum bit rate, information about a list of PDU session resources to be setup, a handover preparation information message (RRC context), location reporting information, and a mobility restriction list. (The RRC container included in the handover request message may also be used. However, for ease of explanation, the handover request message will be described as an example, but it will be appreciated that any XnAP message (e.g., user equipment context extraction message) may be used without departing from the scope of the disclosure.) Here, the target cell global identifier may be the identifier of the cell provided by the mobile relay.

During, together with, or in conjunction with the movement/cell change/handover/topology adjustment of the mobile relay, the handover of the user equipment (e.g., a single or plurality of pieces of user equipment) served by the mobile relay may be desired.

In an example, when the mobile relay performs the handover/topology adjustment for the mobile relay through different donor base stations/IAB-donor-CUs, a change of the PCI/system information of the cell served by the corresponding mobile relay may be caused. Accordingly, the handover of the user equipment served by the mobile relay may be desired.

In another example, when the mobile relay performs the handover/topology adjustment for the mobile relay having different donor base stations/IAB-donor-CUs, the wireless backhaul link between the mobile relay and the source donor base station is changed to the wireless backhaul link between the mobile relay and the target donor base station. When the wireless backhaul link is changed, a packet/PDU loss may occur on the wireless link. For a wireless bearer having a backhaul RLC channel operating in an RLC AM mode, lossless transfer is difficult because the RLC entity is reestablished when the wireless backhaul link is changed. To compensate for this, the handover of the user equipment served by the mobile relay may be desired. As another example, it may be requested to retransmit a lost packet/PDU.

The handover/topology adjustment of the mobile relay and the handover of one or more pieces of user equipment served by the mobile relay may be performed at a same time or in conjunction.

For example, when performing the handover/topology adjustment of the mobile relay, respective user equipment served by the mobile relay may be handed over by applying the respective handover procedures together.

In an example, in step 1 of FIG. 15, when the source donor base station/IAB-donor-CU transmits a handover request message for the mobile relay to the target donor base station/IAB-donor-CU, the source donor base station/IAB-donor-CU may also transmit together a handover request message for respective user equipment served by the mobile relay. The handover request message for the mobile relay transmitted by the source donor base station/IAB-donor-CU to the target donor base station/IAB-donor-CU may include handover request messages for the respective user equipment served by the mobile relay. When the source donor base station/IAB-donor-CU determines the handover for the mobile relay, the source donor base station/IAB-donor-CU may also determine the handover of the user equipment/user equipment group served by the mobile relay and/or the retransmission of lost packets.

In another example, in step 1 of FIG. 15, in case that the source donor base station/IAB-donor-CU transmits a handover request message for the mobile relay to the target donor base station/IAB-donor-CU, the target donor base station/IAB-donor-CU may determine whether or not handover of the user equipment/user equipment group served by the mobile relay and/or retransmission of lost packets are required when performing the handover for the mobile relay. A case in which a PCI change is determined to be necessary may be an example. The target donor base station/IAB-donor-CU may transmit a handover request acknowledgment/response message or a handover preparation failure message to the source donor base station/IAB-donor-CU by configuring the handover request acknowledgment/response message or the handover preparation failure message to include information directing the corresponding message. The source donor base station/IAB-donor-CU may transmit at least one handover request message for respective user equipment served by the mobile relay to the target donor base station/IAB-donor-CU, and responsively, receive at least one handover request acknowledgement/response message.

In another example, when the source donor base station/IAB-donor-CU transmits the RRC reconfiguration message for the handover of the mobile relay, at least one RRC reconfiguration message for the respective user equipment served by the mobile relay may be transmitted together with the RRC reconfiguration message for the handover of the mobile relay. For example, the RRC container(s) carrying the RRC reconfiguration message for the handover of the mobile relay and the RRC container(s) carrying the RRC reconfiguration message for the respective user equipment served by the mobile relay may be transmitted to the mobile relay via the source IAB-donor-DU.

As another example, when the source donor base station/IAB-donor-CU transmits the RRC reconfiguration message for the handover of the mobile relay, the RRC reconfiguration message(s) for the respective user equipment served by the mobile relay may be included in the RRC reconfiguration message for the handover of the mobile relay. For example, the RRC reconfiguration message for the handover of the mobile relay may include the RRC reconfiguration message(s) for the respective user equipment served by the mobile relay as respective information elements. As another example, the RRC reconfiguration message(s) for the respective user equipment served by the mobile relay may be transmitted to the mobile relay at a particular time point at which the source donor base station/IAB-donor-CU transmits the RRC reconfiguration message for the handover of the mobile relay, e.g., at a time point before the transmission, during the transmission, or after the transmission. For example, before the source donor base station/IAB-donor-CU transmits the RRC reconfiguration message for the handover of the mobile relay, the RRC reconfiguration message(s) for the respective user equipment served by the mobile relay may be transmitted to the mobile relay.

In another example, when transmitting an RRC reconfiguration complete message to the target donor base station/IAB-donor-CU to complete the RRC handover procedure, the mobile relay may transmit at least one RRC reconfiguration complete message for the respective user equipment served by the mobile relay together with the RRC reconfiguration complete message for the mobile relay. For example, the RRC container(s) carrying the RRC reconfiguration complete message for the mobile relay and the RRC container(s) carrying the RRC reconfiguration complete message for the respective user equipment served by the mobile relay may be transmitted to the target donor base station/IAB-donor-CU via the target IAB-donor-DU.

In another example, when the mobile relay transmits the RRC reconfiguration complete message to the target donor base station/IAB-donor-CU, the RRC reconfiguration complete message(s) for the respective user equipment served by the mobile relay may be included in the RRC reconfiguration complete message for the mobile relay. For example, the RRC reconfiguration complete message for the mobile relay may include the RRC reconfiguration complete message(s) for the respective user equipment served by the mobile relay as respective information elements.

As another example, the mobile relay may receive the RRC reconfiguration complete message(s) for the respective user equipment served by the mobile relay before transmitting the RRC reconfiguration complete message to the target donor base station/IAB-donor-CU.

In another example, when the target donor base station/IAB-donor-CU transmits a path switch request message to the core network (e.g., AMF/SMF) for path switching of data traffic of the mobile relay itself, the target donor base station/IAB-donor-CU may also transmit together at least one path switch request message for the respective user equipment served by the mobile relay. As another example, the target donor base station/IAB-donor-CU may transmit the path switch request message(s) for the respective user equipment served by the mobile relay by including the path switch request message(s) for path switching of data traffic of the mobile relay itself. As another example, the target donor base station/IAB-donor-CU may receive the RRC reconfiguration complete message(s) for the respective user equipment served by the mobile relay before transmitting the path switch request message via the core network (e.g., AMF) for path switching of data traffic of the mobile relay itself.

In another example, when the core network (e.g., AMF/SMF) transmits a path switch request acknowledgment/response message for the mobile relay to the target donor base station/IAB-donor-CU, at least one path switch request acknowledgment/response message for the respective user equipment served by the mobile relay may also be transmitted together. As another example, the path switch request acknowledgment/response message for the mobile relay transmitted by the core network (e.g., AMF/SMF) to the target donor base station/IAB-donor-CU may include at least one path switch request acknowledgment/response message for the respective user equipment served by the mobile relay. As another example, the core network (e.g., AMF/SMF) may receive the path switch request acknowledgment/response message for the respective user equipment served by the mobile relay before transmitting the path switch request acknowledgment/response message for the mobile relay to the target donor base station/IAB-donor-CU.

In another example, when the target donor base station/IAB-donor-CU transmits a user equipment (UE) context release message for the mobile relay transmitted to the source donor base station/IAB-donor-CU, at least one UE context release message for the respective user equipment served by the mobile relay may also be transmitted together. As another example, the UE context release message for the mobile relay transmitted to the target donor base station/IAB-donor-CU to the source donor base station/IAB-donor-CU may include the UE context release message for the respective user equipment served by the mobile relay. As another example, the target donor base station/IAB-donor-CU may receive the path switch request acknowledgment/response message for the respective user equipment served by the mobile relay before transmitting the UE context release message for the mobile relay to the source donor base station/IAB-donor-CU.

In another example, when performing a handover/topology adjustment of a mobile relay, (grouped) handover procedures may be performed, for one or more pieces of user equipment (or all pieces of user equipment, a set of pieces of user equipment, a group of pieces of user equipment, or user equipment groups) served by the mobile relay. For clarity of explanation and ease of understanding, in the following, the user equipment will be referred to as one or more pieces of user equipment, but this is only for ease of explanation. The user equipment may refer to any number of user equipment, including all user equipment served by the corresponding mobile relay, a specific group of user equipment served over a given cell provided by the corresponding relay, or a user equipment group having a specific configuration (e.g., AM RLC), functionality, characteristics, or capability. One handover procedure may cause the handover/topology adjustment of the mobile relay and the (grouped) handover to be performed for one or more pieces of user equipment served by the mobile relay. Both the mobile relay and the user equipment served by the mobile relay may be mobility/handover supported.

In an example, a group handover request message may be defined to direct the handover/topology adjustment for the mobile relay and/or a (grouped) handover resource preparation request for at least one user equipment served by the mobile relay. For clarity of explanation and ease of understanding, in the following, this will be referred to as the group handover request message. This is for convenience only and may be replaced with any other name. This message may be defined distinctly from the handover request message that requests the preparation of resources for the handover of single user equipment.

In another example, information for directing the handover/topology adjustment for the mobile relay and/or the (grouped) handover resource preparation request for at least one user equipment served by the mobile relay may be defined and included in the handover request message.

As another example, the group handover request message described above, or the handover request message including information for directing the group handover, may include a source base station node user equipment XnAP ID for the mobile relay and user equipment context information for the corresponding mobile relay, and a source base station node user equipment XnAP ID for the respective user equipment (e.g., at least one user equipment served by the mobile relay) and user equipment context information for the corresponding user equipment.

In another example, if the target donor base station/IAB-donor-CU fails to accept at least one PDU session resource from at least one user equipment served by the mobile relay, or if a failure occurs during handover preparation, the target donor base station/IAB-donor-CU may transfer the source base station node user equipment XnAP ID for the corresponding user equipment and the corresponding cause to the source donor base station/IAB-donor-CU. For example, this information may be transmitted via a group handover request acknowledgment/response message or a handover request acknowledgment/response message. As another example, the information may be transmitted to the corresponding user equipment via respective handover preparation failure messages. The source donor base station/IAB-donor-CU may handover the corresponding user equipment to a neighboring cell other than the cell provided by the target donor base station/IAB-donor-CU or to a neighboring cell other than the cell provided by the mobile relay.

In another example, the message that the target donor base station/IAB-donor-CU transmits may include: a group handover request acknowledgment/response message to the above-described group handover request message or a handover request message including information for directing a group handover; or a handover request acknowledgment/response message including information notifying about resources prepared for the group handover. The group handover request acknowledgment/response message or the handover request acknowledgment/response message including information notifying about the prepared resources for the group handover may include a source base station node user equipment XnAP ID for the mobile relay, a target base station node user equipment XnAP ID, a list of accepted PDU session resources, a handover command/RRC reconfiguration message and/or a source base station node user equipment XnAP ID for respective user equipment (e.g., at least one user equipment served by the mobile relay), a target base station node user equipment XnAP ID, accepted PDU session resource list information, and a handover command/RRC reconfiguration message.

In another example, index information may be defined and used to map at least one of the source base station node user equipment XnAP ID, the target base station node user equipment XnAP ID, or the list of accepted PDU session resources. The corresponding information may be included in the corresponding message.

In another example, information may be defined and used to identify a group of user equipment served by the mobile relay. The corresponding information may be included in the corresponding message.

In another example, when transmitting the RRC reconfiguration message for the handover of the mobile relay, the source donor base station/IAB-donor-CU may send the RRC reconfiguration message(s) for the respective user equipment (e.g., at least one user equipment served by the mobile relay) together with the RRC reconfiguration message(s) for the handover of the mobile relay. For example, the RRC container(s) carrying the RRC reconfiguration message for the handover of the mobile relay and the RRC container(s) carrying the RRC reconfiguration message(s) for the respective user equipment served by the mobile relay may be transmitted to the mobile relay via the source IAB-donor-DU.

In another example, when transmitting the RRC reconfiguration message for the handover of the mobile relay, the source donor base station/IAB-donor-CU may include the RRC reconfiguration message(s) for the respective user equipment (e.g., at least one user equipment served by the mobile relay) in the RRC reconfiguration message for the handover of the mobile relay. For example, the RRC reconfiguration message for the handover of the mobile relay may include the RRC reconfiguration message(s) for the respective user equipment served by the mobile relay as respective information elements. As another example, the source donor base station/IAB-donor-CU may transmit the RRC reconfiguration message(s) for the respective user equipment served by the mobile relay to the mobile relay at a particular time point at which the source donor base station/IAB-donor-CU transmits the RRC reconfiguration message for the handover of the mobile relay, e.g., at a time point before the transmission, during the transmission, or after the transmission. For example, before the source donor base station/IAB-donor-CU transmits the RRC reconfiguration message for the handover of the mobile relay, the RRC reconfiguration message(s) for the respective user equipment (e.g., at least one user equipment served by the mobile relay) may be transmitted to the mobile relay.

In another example, the handover configuration for at least one user equipment served by the mobile relay (or common configuration information included in the radio resource configuration for handover, one or more information elements included in the reconfiguration with sync, T304, or cell common configuration information (spCellConfigCommon/ServingCellConfigCommon)) may be broadcast to the user equipment via system information. The user equipment which supports the corresponding capability may obtain the corresponding system information. The handover configuration for the at least one user equipment served by the mobile relay may be generated/transmitted without including the common configuration information (e.g., T304 or cell common configuration information) included in the radio resource configuration for handover received via the above-described system information.

In another example, when transmitting an RRC reconfiguration complete message to the target donor base station/IAB-donor-CU to complete the RRC handover procedure, the mobile relay may transmit at least one RRC reconfiguration complete message for the respective user equipment (e.g., at least one user equipment served by the mobile relay) together with the RRC reconfiguration complete message for the mobile relay. For example, the RRC container(s) carrying the RRC reconfiguration complete message for the mobile relay and the RRC container(s) carrying the RRC reconfiguration complete message for the respective user equipment (e.g., at least one user equipment served by the mobile relay) may be transmitted to the target donor base station/IAB-donor-CU via the target IAB-donor-DU.

In another example, when the mobile relay transmits the RRC reconfiguration complete message to the target donor base station/IAB-donor-CU, the RRC reconfiguration complete message(s) for the respective user equipment (e.g., at least one user equipment served by the mobile relay) may be included in the RRC reconfiguration complete message for the mobile relay. For example, the RRC reconfiguration complete message for the mobile relay may include the RRC reconfiguration complete message(s) for the respective user equipment (e.g., at least one user equipment served by the mobile relay) as respective information elements.

As another example, the mobile relay may receive the RRC reconfiguration complete message(s) for the respective user equipment (e.g., at least one user equipment served by the mobile relay) before transmitting the RRC reconfiguration complete message(s) to the target donor base station/IAB-donor-CU.

In another example, a group path switch request message may be defined to direct data traffic path switching of the mobile relay (e.g., data traffic path switching to replace the downlink termination point of the NG-U transmit bearer with a new termination point) and/or a (grouped) data traffic path switching request for at least one user equipment served by the mobile relay. As another example, information may be defined and included in a path switch request message for directing a data traffic path switching of the mobile relay and/or a (grouped) data traffic path switching request for at least one user equipment served by the mobile relay. The path switch request message may include a group path switch request message or information directing the data traffic path switching of the mobile relay and/or a (grouped) data traffic path switching request for at least one user equipment served by the mobile relay. The path switching request message may include a base station node user equipment NGAP ID for the mobile relay, an AMF user equipment NGAP ID, a list of PDU session resources being switched in the downlink for the mobile relay and/or a base station node user equipment NGAP ID, an AMF user equipment NGAP ID, and a list of PDU session resources being switched in the downlink for the respective user equipment (e.g., at least one user equipment served by the mobile relay).

In another example, the target donor base station/IAB-donor-CU may receive RRC reconfiguration complete message(s) for the respective user equipment (e.g., at least one user equipment served by the mobile relay) prior to transmitting a group path switching request message or a path switching request message including information directing the path switching of data traffic of the mobile relay and/or a (grouped) data traffic path switching request for at least one user equipment served by the mobile relay.

In another example, a group path switching request acknowledgment/response message may be defined to direct a path switching request acknowledgment/response notifying that the path switching of the mobile relay has been successfully completed and/or a (grouped) path switching request acknowledgment/response for at least one user equipment served by the mobile relay. As another example, information directing the path switch request acknowledgment/response of the mobile relay and/or the (grouped) path switch request acknowledgment/response for at least one user equipment served by the mobile relay may be defined and included in the path switching request acknowledgment/response (path switch request acknowledge) message. The group path switch request acknowledgment/response message, or the path switch request acknowledgment/response message including information directing a path switch request acknowledgment/response from the mobile relay and/or a (grouped) path switch request acknowledgment/response for at least one user equipment served by the mobile relay, may include the base station node user equipment NGAP ID for the mobile relay, AMF user equipment NGAP ID, a list of PDU session resources switched in the downlink and/or base station node user equipment NGAP ID, AMF user equipment NGAP ID, a list of PDU session resources switched in the downlink for the respective user equipment (e.g., at least one user equipment(s) served by the mobile relay).

In another example, index information may be defined and used to map at least one of base station node user equipment NGAP ID, AMF user equipment NGAP ID, and a list of PDU session resources switched from the downlink. As another example, information identifying a group of user equipment served by the mobile relay may be defined and used. The corresponding information may be included in the corresponding message.

In another example, a group user equipment context release message may be defined, by which the target donor base station/IAB-donor-CU may direct the source donor base station/IAB-donor-CU to release the resources of the mobile relay and/or the target donor base station/IAB-donor-CU may direct the source donor base station/IAB-donor-CU to release the (grouped) resources for at least one user equipment served by the mobile relay. As another example, information may be defined and included in the user equipment context release message to direct the release of resources of the mobile relay and/or the release of (grouped) resources for at least one user equipment served by the mobile relay. The group user equipment context release message or the user equipment context release message including information directing the release of resources for the mobile relay and/or the release of (grouped) resources for at least one user equipment served by the mobile relay may include the source base station node user equipment XnAP ID and the target source base station node user equipment XnAP ID for the respective user equipment and/or the source base station node user equipment XnAP ID, and the target source base station node user equipment XnAP ID for the at least one user equipment served by the mobile relay. As another example, index information for mapping the source base station node user equipment XnAP ID, the target source base station node user equipment XnAP ID to at least one of the source base station node user equipment XnAP IDs may be defined and used. As another example, information identifying a group of user equipment served by the mobile relay may be defined and used. The corresponding information may be included in the corresponding message.

Hereinafter, another embodiment of the disclosure will be described.

During the handover/topology adjustment of the mobile relay, at least one user equipment served by the mobile relay may transmit and receive data while maintaining an RRC connection over the cell served by the mobile relay.

For example, in case that the mobile relay performs a handover/topology adjustment procedure without a PCI change for any cell served by the mobile relay, data may be transmitted and received by maintaining a wireless connection on a wireless interface Uu between the user equipment served by the mobile relay and the mobile relay. However, as the wireless backhaul link between the mobile relay and the source donor base station is changed to the wireless backhaul link between the mobile relay and the target donor base station, a packet/PDU loss may occur on the wireless link. As a result, a loss may occur in the wireless/wireless backhaul section for at least one user equipment configured to have a wireless bearer operating in an RLC AM mode. To improve this, during the handover/topology adjustment of the mobile relay, the target donor base station/IAB-donor-CU (or the source donor base station/IAB-donor-CU) may direct the user equipment served by the mobile relay to perform one of PDCP data recovery or PDCP entity reestablishment for the wireless bearer if the user equipment is provided with a wireless bearer having the RLC AM mode. For example, this may be directed at step 2, step 3, or any step in FIG. 15.

Upon receiving information directing PDCP data recovery, the corresponding user equipment may retransmit all PDCP data PDUs previously submitted to corresponding AM RLC entities in the ascending order of associated count values, for which successful transfers have not been confirmed by lower layers. Each of the AM RLC entities may be in one of the following states: reestablishment, release, release and then establishment, reconfiguration, or previous configuration retaining.

Upon receiving information directing PDCP entity reestablishment, the corresponding user equipment may perform retransmission or transmission of all PDCP SDUs already having PDCP SNs, starting with the first PDCP SDU, for which successful transfer of the corresponding PDCP Data PDU has not been confirmed by the lower layer, in the ascending order of count values associated with the PDCP SDU prior to the PDCP entity reestablishment.

The donor base station/IAB-donor-CU may use a dedicated RRC message (e.g., an RRC reconfiguration message) to direct the dedicated RRC message to the corresponding user equipment via the mobile relay. For example, legacy user equipment which does not support corresponding functionality may be directed using the dedicated RRC message. In another example, the donor base station/IAB-donor-CU may use system information to direct the corresponding user equipment via the mobile relay. For example, the system information may be used to direct the user equipment which supports the corresponding function. Transmission of the system information via the mobile relay may be directed by any of the methods described in this specification.

In another example, if the mobile relay performs a handover/topology adjustment procedure including a PCI change for any cell served by the mobile relay, the user equipment served by the mobile relay MUST is requested to perform cell change/handover (reconfiguration with sync) operations. The operations may include, for example, starting the T304 timer, starting downlink synchronization to a target cell, starting random access, applying the BCCH configuration specified in TS38.331 9.1.1. to the target cell, obtaining an MIB, establishing RLC entities in a target cell group having the same configuration as a source cell group for each SRB, setting a logical channel having the same configuration as the source cell group, applying a new user equipment identifier (newUE-Identity) value to a C-RNTI in the target cell group, MAC reestablishment, lower layer configuration (configuring a lower layer in accordance with received spCellConfigCommon, and configuring a lower layer in accordance with any additional fields, not covered in the previous, if included in the received reconfiguration with sync, e.g., DRB configuration), logged measurement available for the user equipment, logged measurement available for an RRC reconfiguration complete message if any of an available connection establishment failure, an available connection resume failure, an available wireless link failure, or an available handover failure has occurred, including possessed information of the available connection establishment failure, the available connection resume failure, the available wireless link failure, and the available handover failure, CSI reporting configuration not requesting that the user equipment be notified of the SFN of the target cell if any, scheduling request configuration, applying part of the sounding RS configuration, and the like. Although the at least one user equipment served by the mobile relay is requested to perform the cell change/handover operation in response to the PCI change, there is no significant change in the fundamental radio channel state between the corresponding user equipment and the mobile relay. Therefore, the corresponding user equipment served by the mobile relay may omit, or may perform in a simplified form, at least one of the cell change/handover operations (reconfiguration with sync) described above. The corresponding operations may include starting the T304 timer, starting downlink synchronization to a target cell, starting random access, applying the BCCH configuration specified in TS38.331 9.1.1. to the target cell, obtaining an MIB, establishing RLC entities in a target cell group having the same configuration as a source cell group for each SRB, setting a logical channel having the same configuration as the source cell group, applying a new user equipment identifier (newUE-Identity) value to the C-RNTI in the target cell group, MAC reestablishment, lower layer configuration, logged measurement available for the user equipment, logged measurement available for an RRC reconfiguration complete message if any of an available connection establishment failure, an available connection resume failure, an available wireless link failure, or an available handover failure has occurred, including possessed information of the available connection establishment failure, the available connection resume failure, the available wireless link failure, and the available handover failure, CSI reporting configuration not requesting that the user equipment be notified of the SFN of the target cell if any, scheduling request configuration, applying part of the sounding RS configuration, and the like.

To support this, for example, when the user equipment served by the mobile relay performs the cell change/handover based on the PCI change or the handover based on the handover/topology adjustment by the mobile relay, information directing a simplified operation may be defined to notify the corresponding user equipment of the simplified operation.

For example, when the user equipment served by the mobile relay performs the cell change/handover due to the PCI change or the handover due to the handover/topology adjustment of the mobile relay, it is not requested to direct and apply a new user equipment identifier for use as a C-RNTI. The source cell and the target cell may use the same C-RNTI. If the donor base station/IAB-CU is not changed, the existing SRB may be used without the RLC entity establishment or the logical channel establishment for the SRB, and the RRC reconfiguration complete message may not be requested to include the logged measurement or the failure information. Upon receiving the corresponding indication information, the user equipment may perform the cell change/handover on the cell provided by the mobile relay without performing at least one of the above described cell change/handover operations (reconfiguration with sync).

In another example, for each DRB, the user equipment may perform at least one of: establishing/reconfiguring/maintaining an RLC entity in the target cell group having the same configuration as the source cell group, establishing/reconfiguring/maintaining a logical channel having the same configuration as the source cell group, establishing/reconfigure/maintaining a PDCP entity in the target cell group having the same configuration as the source cell group, or establishing/reconfiguring/maintaining an SDAP entity having the same configuration as the source cell group.

The above may be directed to the corresponding user equipment using information for directing the above. As another example, the user equipment may instruct the corresponding user equipment to establish, set, reconfigure, and/or maintain the target cell group to have the same configuration as the source cell group for any radio resource configuration parameters configured in the source cell group. For example, any configuration for transmitting and receiving data over the control channel/data channel may maintain the same configuration as the source cell group, except for parameters for synchronization and random access procedures, to resume transmitting and receiving the data. The corresponding user equipment may be directed using information for directing the above. The corresponding indication information may provide indication via corresponding indication information for each parameter using the same configuration as the source cell. As another example, one or more parameters may be directed by single indication information.

For example, the base station does not need to assign RACH resources to the user equipment. Therefore, the base station may include, in the corresponding RRC reconfiguration message or handover command, at least one of timing adjustment indication information, preconfigured uplink grant, or beam indication information. If the user equipment has not received the configured uplink grant, the user equipment may receive the uplink grant via the PDCCH of the target cell. The user equipment may transmit the RRC reconfiguration completion message to the base station using the corresponding uplink grant.

The mobile relay (mobile relay DU) serving the corresponding user equipment may share at least one of the cell group configuration, the RLC configuration, the logical channel configuration, and the C-RNTI for the source cell in the same configuration as the cell group configuration, the RLC configuration, the logical channel configuration, and the C-RNTI for the target cell. As another example, the mobile relay (mobile relay DU) serving the corresponding user equipment may share and use at least one of the cell group configuration, the RLC configuration, the logical channel configuration, and the C-RNTI for the corresponding user equipment of the mobile relay DU providing the source cell with the same configuration as the cell group configuration, the RLC configuration, the logical channel configuration, and the C-RNTI for the corresponding user equipment of the mobile relay DU which provides the target cell. The source cell and the target cell provided by the mobile relay may be provided via a single mobile relay DU within a single mobile relay or via different mobile relay DUs within a single mobile relay. For example, the source cell may be provided via one mobile relay DU and the target cell may be provided via another mobile relay DU different from the corresponding mobile relay DU.

In another example, the mobile relay may suspend the configured RRC connection, RRC configuration parameters, and the corresponding cell/MCG transmission in the source cell group during the handover/topology adjustment of the mobile relay, during particular actions/steps of the handover/topology adjustment of the mobile relay, or during the target cell synchronization and random access procedures of the mobile relay. As another example, the corresponding user equipment may suspend the configured RRC connection, RRC configuration parameters, and the corresponding cell/MCG transmission in the source cell group during the handover/topology adjustment of the mobile relay, during particular actions/steps of the handover/topology adjustment of the mobile relay, or during the synchronization and random access procedures of the corresponding user equipment.

When successfully completing a random access to the target cell by synchronization, the corresponding RRC connection, RRC configuration parameters, and the corresponding cell/MCG transmission may be resumed to transmit and receive data. The above may be directed to the corresponding user equipment using information for directing the above. As another example, the corresponding user equipment may suspend the configured RRC connection, RRC configuration parameters, and corresponding cell/MCG transmission in the source cell group while performing synchronization to the changed PCI cell by the mobile relay. When transmitting an RRC reconfiguration complete message to the PCI changed cell by synchronization, the corresponding RRC connection, RRC configuration parameters, and the corresponding cell/MCG transmission may be resumed to transmit and receive data. The above may be directed to the corresponding user equipment using information for directing the above.

As another example, the donor base station/IAB-donor-CU may use any of the above-described indication information to direct a dedicated RRC message (e.g., RRC reconfiguration message) to the corresponding user equipment via the mobile relay. For example, legacy user equipment which does not support the corresponding functionality may be directed using the dedicated RRC message. In another example, the donor base station/IAB-donor-CU may use system information to direct the corresponding user equipment via the mobile relay. For example, the system information may be used to direct user equipment which supports the corresponding function. Transmission of the system information via the mobile relay may be directed by any of the methods described in this specification.

As another example, on or before a PCI change is initiated/performed/applied for the cell served by the mobile relay, the mobile relay may transmit information to the donor base station/IAB-donor-CU serving the corresponding mobile relay to direct the initiation/performance/application of the PCI change.

Performing handover procedures to a plurality of user equipments served by the mobile relay by transmitting handover commands to each user equipment in a short period of time during PCI changes and/or during handover/topology adjustment of the mobile relay may result in significant signaling overhead. Some user equipment may not be able to perform the handover in a timely manner. As a result, a wireless link failure and/or a handover failure may occur and/or be detected in the user equipment. The user equipment may initiate an RRC reestablishment procedure. To restore the RRC connection, time is required for wireless link failure/handover failure detection, cell selection, RRC reestablishment signaling, and the like. To reduce such service interruptions, the donor base station/IAB-donor-CU may configure conditional handover or conditional RRC connection reestablishment for the user equipment served by the mobile relay and allow the corresponding user equipment to initiate and/or perform handover or RRC reestablishment if the corresponding conditions are satisfied.

For example, the donor base station/IAB-donor-CU may configure indication/help information in the user equipment to trigger the conditional handover, the conditional RRC reestablishment, and/or the RRC reestablishment for the user equipment served by the mobile relay. The corresponding instruction/help information may include at least one of the PCI of the cell to be changed, a conditional handover trigger condition/event, a conditional handover configuration, a (conditional) RRC reset trigger condition/event, and PCI change, cell change, and/or handover timing information. The conditional handover configuration, the PCI change, and/or the cell change timing information may be provided in accordance with any embodiment included in the disclosure.

For example, the corresponding help information may be directed to the user equipment via RRC-specific information. As another example, the corresponding help information may be directed to the user equipment via system information. In another example, the conditional handover trigger condition/event or the (conditional) RRC reset trigger condition/event may be the time-based trigger condition using the PCI change timing information or the cell change timing information. The time-based trigger condition using the PCI change/cell change timing may be configured with a measurement-based trigger condition (e.g., CHO A3/A4/A5). As another example, the time-based trigger condition using the PCI change/cell change timing may be configured without the measurement-based trigger condition (e.g., CHO A3/A4/A5). If the PCI change/cell change time is configured as a particular absolute time/moment/point in time, the measurement-based trigger condition is not requested to be configured together. In another example, an A2 event may be defined to be usable as a trigger condition for the conditional handover or the conditional RRC reset.

In the related art, only A3/A4/A5 were used as measurement-based trigger conditions/events for conditional handover. However, a PCI change may be detected by the serving cell as event A2 (event A2: serving becomes worse than threshold) in which the measurement value is worse than a particular threshold. Therefore, event A2 may be further defined and used as a trigger condition for conditional handover or conditional RRC reestablishment. For example, a conditional event (condEventA2) may be defined in the CondTriggerConfig information element. The conditional event information element may include a2-threshld, hysteresis, and timeToTrigger information as detail information elements. As another example, a time-based trigger condition using PCI change/cell change timing may be configured with arbitrary wireless link failure criteria. For example, expiry of a radio problem timer started after indication of radio problems from the physical layer, RLC failure, and the like may be configured with arbitrary wireless link failure criteria. In another example, the conditional handover, the conditional RRC reestablishment, and/or the RRC reestablishment may be initiated when any of the wireless link failure criteria are satisfied. In another example, the candidate cell configuration for the conditional handover, the conditional RRC reestablishment, and/or the RRC reestablishment may be configured with a changed PCI value. In another example, when initiating/executing the conditional handover, the conditional RRC reestablishment, and/or the RRC reestablishment, the user equipment may initiate/execute the conditional handover, the conditional RRC reestablishment, and/or the RRC reestablishment when a cell using the directed PCI value is selected. The user equipment may apply a stored conditional handover configuration (e.g., condRRCReconfig) associated with the selected cell. In another example, the conditional handover configuration may be provided in accordance with any embodiment included in the disclosure.

In another example, precise time control may be requested when a PCI change/cell change occurs. Before a switch point, (all) user equipment (or RRC-connected user equipment) served by the mobile relay is requested to perform conditional handover, conditional RRC reestablishment, and handover command reception and/or transmit an acknowledgment of RRC message reception. A particular operation for handover (e.g., target cell synchronization or random access procedures to the target cell) may not be initiated before the switch point. The particular operation for handover may be initiated after the switch point.

In another example, in the related art, if a handover failure occurs when the user equipment performs a handover, the user equipment transmits a RRC reestablishment request message including a PCI, a C-RNTI, or a shortMAC-I/MAC-1 of the source PCell. The base station receiving the corresponding message uses the PCI and the C-RNTI of the source PCell to identify the corresponding user equipment. In case that the user equipment fails to hand over during the PCI change process, if the PCI of the cell provided by the mobile relay is changed and the unchanged PCI is deleted, released, and/or discarded, the base station may not detect/extract the user equipment context for the corresponding user equipment or reestablish/maintain the RRC connection. Therefore, it is requested to maintain information about the corresponding change history when the PCI is changed. In another example, if a handover failure occurs when the user equipment performs a handover due to a PCI change, the user equipment may an RRC reestablishment request message including at least one of the PCI, C-RNTI, shortMAC-I/MAC-1 of the target PCell. As another embodiment, the user equipment may transmit the RRC reestablishment request message including at least one of the PCI, the C-RNTI, and the shortMAC-I/MAC-1 of the target PCell and the PCI, the C-RNTI, and the shortMAC-I/MAC-I of the source PCell.

During the handover/topology adjustment of the mobile relay and/or during the handover of the user equipment served by the mobile relay, it is requested to provide/support continuity of service for the user equipment served by the mobile relay. For example, lossless transfer is requested to be supported for radio bearers using RLC-AM. As another embodiment, a handover operation for the corresponding user equipment is requested to be supported to minimize service interruptions.

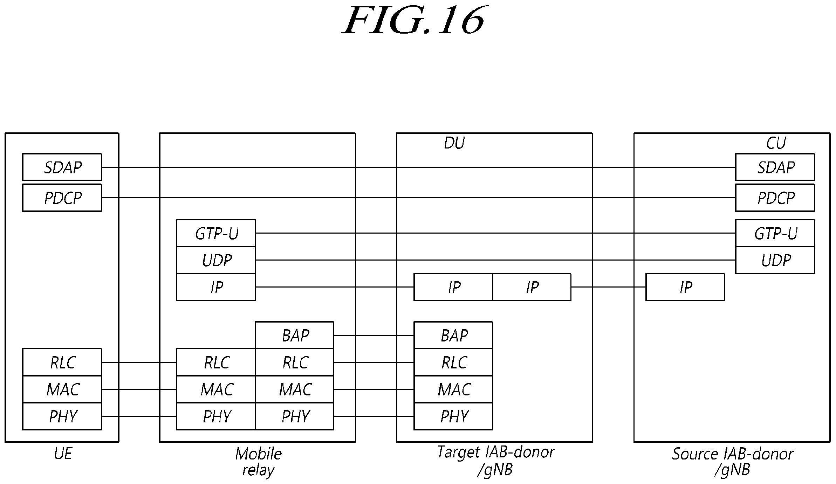

FIGS. 16 to 18 are diagrams illustrating a variety of examples of protocol structures in mobile relay handover. For example, FIGS. 16 to 18 illustrate examples of protocol structures for transmitting user plane data of user equipment served by a mobile relay during and/or after handover/topology adjustment of the mobile relay. At least one of FIGS. 16, 17, and 18 may be applied in any order, or the structure of any one of FIGS. 16, 17, and 18 may be utilized.

The data wireless bearer (DRB) of the user equipment served by the mobile relay may be established, connected, and/or configured in conjunction with the F1-U protocol (F1-U GTP-U tunnel) between the mobile relay and the donor base station/IAB-donor-CU as described above.

For example, during the handover/topology adjustment of the mobile relay and/or during the handover of the user equipment served by the mobile relay, the mobile relay may maintain the F1-U/GTP-U tunnel between the mobile relay and the source donor base station/IAB-donor-CU to associate the data wireless bearer (DRB) carrying the user data of the user equipment served by the mobile relay. After the handover/topology adjustment of the mobile relay is completed, the user data of the user equipment served by the mobile relay may still be transmitted and received through the corresponding F1-U protocol/GTP-U tunnel. The user plane traffic of the user equipment served by the mobile relay may be transferred from the source donor base station/IAB-donor-CU to the core network.

Through the handover/topology adjustment of the mobile relay and/or the handover of the user equipment served by the mobile relay, the donor base station/IAB-donor-CU servicing the mobile relay changes from the source donor base station/IAB-donor-CU to the target donor base station/IAB-donor-CU. The user equipment context for the user equipment served by the mobile relay may be continuously maintained in the source donor base station/IAB-donor-CU. In addition, or optionally, the user equipment context for the user equipment served by the mobile relay may be maintained in the target donor base station/IAB-donor-CU.

In an example, the uplink user plane data of the user equipment served by the mobile relay may be mapped/associated in the mobile relay to be transmitted to the source donor base station/IAB-donor-CU via the target donor base station/IAB-donor-CU. For example, when the handover for the mobile relay MT has been executed, but the migration for the mobile relay DU has not been executed (or when the source cell and the target cell served by the mobile relay are provided via a single mobile relay DU within a single mobile relay and the corresponding mobile relay DU is configured via the source donor base station/IAB-donor-CU), F1-U corresponding to the uplink user plane data of the user equipment and F1-C corresponding to the uplink control plane data of the user equipment may be mapped/associated in the mobile relay and transmitted to the source donor base station/IAB-donor-CU via the target donor base station/IAB-donor-CU. For the (source) mobile relay DU configured/controlled by the source donor base station/IAB-donor-CU before the corresponding mobile relay DU, default backhaul RLC channel information, default BAP routing ID, and uplink/downlink TNL address information for F1-U and F1-C traffic processing by the corresponding (source) mobile relay DU are configured such that data is transmitted to the source donor base station/IAB-donor-CU.

The uplink user plane data of the user equipment served by the mobile relay may be transmitted by being mapped to the GTP-U tunnel between the mobile relay and the source donor base station/IAB-donor-CU, as shown in FIG. 16. For example, the transmission path for user plane data of the user equipment served by the mobile relay may be switched from "user equipment <-> source donor base station <-> core network" to "user equipment <-> target donor base station <-> source donor base station <-> core network" to transmit and receive the data. The user equipment connected to the corresponding mobile IAB node through the migration of a mobile IAB-DU may be handed over from a cell (i.e., a source cell) served by a DU having an F1AP conjunction with a source CU to a cell (i.e., a target cell) served by a DU having an F1AP conjunction with a target CU. As in the above-described embodiments, the handover of the mobile IAB-MT and the migration of the mobile IAB-DU may be executed in conjunction or independently. No path switch procedure between the base station and the core network is requested at this stage.

The BAP entity (e.g., the transmitting part of the BAP entity) of the mobile relay may receive BAP SDUs from an upper layer (e.g., GTP-U/UDP/IP). Furthermore, using uplink user plane tunnel information to be established in the mobile relay received from the source donor base station/IAB-donor-CU (or from the target donor base station/IAB-donor-CU through the source donor base station/IAB-donor-CU or from the target donor base station/IAB-donor-CU), a BAP address and a path ID may be determined and a BAP PDU header may be added to create BAP Data PDUs. The source donor base station/IAB-donor-CU or the target donor base station/IAB-donor-CU may direct the uplink user plane tunnel information to be established/modified to the mobile relay via F1AP/RRC messages. The uplink user plane tunnel information to be established/modified, which is directed to the mobile relay, may be associated with at least one of a source base station user equipment XnAP identifier, a target base station user equipment XnAP identifier, a user plane DRB/RLC channel ID, an uplink user plane TNL address (GTP tunnel, transport-layer-address/IP-address, GTP-TEID), and backhaul information of the user equipment served by the mobile relay. Here, the backhaul information may include a BAP routing ID and a next-hop BAP address, which include the BAP address and the path ID of the target IAB-donor/IAB-donor-DU.

One or more pieces of information included in the uplink user plane tunnel information to be established/modified may be transmitted and received between the source donor base station/IAB-donor-CU and the target donor base station/IAB-donor-CU. In an example, the source donor base station/IAB-donor-CU may transmit an XnAP message to the target donor base station/IAB-donor-CU by including one or more pieces of the information included in the uplink user plane tunnel information to be established/modified (e.g., the source base station user equipment XnAP identifier, the user plane DRB-ID/RLC channel ID/LCID of the user equipment served by the mobile relay, or the uplink user plane TNL address) in the XnAP message. In another example, the target donor base station/IAB-donor-CU may transmit the XnAP message to the source donor base station/IAB-donor-CU by including one or more pieces of information (e.g., the target base station user equipment XnAP identifier or the target IAB-donor/IAB-donor-DU BAP routing ID) to be established/modified in the XnAP message.

The source donor base station/IAB-donor-CU or the target donor base station/IAB-donor-CU may transmit the uplink user plane tunnel information to be established/modified to the mobile relay via F1AP/RRC messages. For example, the source donor base station/IAB-donor-CU may transmit the corresponding uplink user plane tunnel information to be set up/modified to the source mobile relay DU via an F1AP message. The target donor base station/IAB-donor-CU may transmit the corresponding uplink user plane tunnel information to be set up/modified to the target mobile relay DU/MT via the F1AP message. The target donor base station/IAB-donor-CU may transmit the corresponding uplink user plane tunnel information to be set up/modified to the mobile relay MT via the RRC message.

The mobile relay or the source donor base station/IAB-donor-CU may direct the downlink user plane tunnel information to be established/modified to the target donor base station/IAB-donor-CU via F1AP/XnAP/RRC messages. The downlink user plane tunnel information to be established/modified, which is directed to the target donor base station/IAB-donor-CU, may be associated with the source base station user equipment XnAP identifier, the target base station user equipment XnAP identifier, the user plane DRB-ID/RLC channel ID/LCID, and the downlink user plane TNL address (e.g., a GTP tunnel, a transport-layer-address/IP-address, or a GTP-TEID) of the user equipment served by the mobile relay.

The source donor base station/IAB-donor-CU and the target donor base station/IAB-donor-CU may exchange, through coordination, one or more pieces of information included in the uplink user plane tunnel information to be established/modified and one or more pieces of information included in the downlink user plane tunnel information to be established/modified, so that the transmission path for the user plane data of the user equipment served by the mobile relay is switched from "user equipment <-> source donor base station <-> core network" to "user equipment <-> target donor base station <-> source donor base station <-> core network" for transmission and reception. For example, such information may be included in the handover request message and/or the handover request acknowledgment/response message to be transmitted and received in step 1 and step 2 of FIG. 15. As another example, the information may be transmitted and received by being included in any XnAP message for switching the transmission path after step 7 of FIG. 15. As another example, in case of a conditional handover/RRC reset, the information may be transmitted and received by being included in any XnAP message for switching the transmission path after the conditional handover is configured on the user equipment.

The source donor base station/IAB-donor-CU or the target donor base station/IAB-donor-CU may transmit the uplink user plane tunnel information to be established/modified and the downlink user plane tunnel information to be established/modified to the mobile relay via F1AP/RRC messages.

When receiving F1AP/RRC messages including the information described above, the mobile relay may create BAP data PDUs including the BAP routing ID of the target donor station/IAB-donor/IAB-donor-DU in the BAP header. The mobile relay may also perform a BAP header rewriting operation upon receiving F1AP/RRC messages including the above-described information. For example, the mobile relay may replace the BAP routing ID (e.g., BAP address or BAP path ID) of the source donor station/IAB-donor/IAB-donor-DU with the BAP routing ID of the source donor station/IAB-donor/IAB-donor-DU in the header of the BAP data PDU. The rewriting operation may be performed in any of the steps specified in this specification or by any indication information. In this regard, the indication information may include information for directing the rewriting of the F1AP/RRC message BAP header and/or configuration information for this purpose (e.g., source BAP routing ID or target BAP routing ID).

In another example, during the handover/topology adjustment of the mobile relay and/or during the handover of the user equipment served by the mobile relay, the F1-U/GTP-U tunnel between the mobile relay and the target donor base station/IAB-donor-CU/IAB-donor-DU and/or the F-U/GTP-U tunnel between the target donor base station/IAB-donor-CU and the source donor base station/IAB-donor-CU/IAB-donor-DU may be established, set up, and/or modified to associate the data wireless bearer (DRB) carrying the user data of the user equipment served by the mobile relay. The user plane traffic of the user equipment served by the mobile relay may be transferred from the source donor base station/IAB-donor-CU to the core network. No route switching procedure between the base station and the core network is requested at this stage.

Through the handover/topology adjustment of the mobile relay and/or the handover of the user equipment served by the mobile relay, the donor base station/IAB-donor-CU servicing the mobile relay changes from the source donor base station/IAB-donor-CU to the target donor base station/IAB-donor-CU. The user equipment context for the user equipment served by the mobile relay may be continuously maintained in the source donor base station/IAB-donor-CU. In addition, or optionally, the user equipment context for the user equipment served by the mobile relay may be maintained in the target donor base station/IAB-donor-CU.

In an example, the uplink user plane data of the user equipment served by the mobile relay may be mapped/associated in the mobile relay to be transmitted to the source donor base station/IAB-donor-CU via the target donor base station/IAB-donor-CU. For example, when the handover for the mobile relay MT has been executed, but the migration for the mobile relay DU has not been executed (or when the source cell and the target cell served by the mobile relay are provided via a single mobile relay DU within a single mobile relay and the corresponding mobile relay DU is configured via the source donor base station/IAB-donor-CU), F1-U corresponding to the uplink user plane data of the user equipment and F1-C corresponding to the uplink control plane data of the user equipment may be mapped/associated in the mobile relay and transmitted to the source donor base station/IAB-donor-CU via the target donor base station/IAB-donor-CU. For the (source) mobile relay DU configured/controlled by the source donor base station/IAB-donor-CU before the corresponding mobile relay DU, default backhaul RLC channel information, default BAP routing ID, and uplink/downlink TNL address information for F1-U and F1-C traffic processing by the corresponding (source) mobile relay DU are configured such that data is transmitted to the source donor base station/IAB-donor-CU.

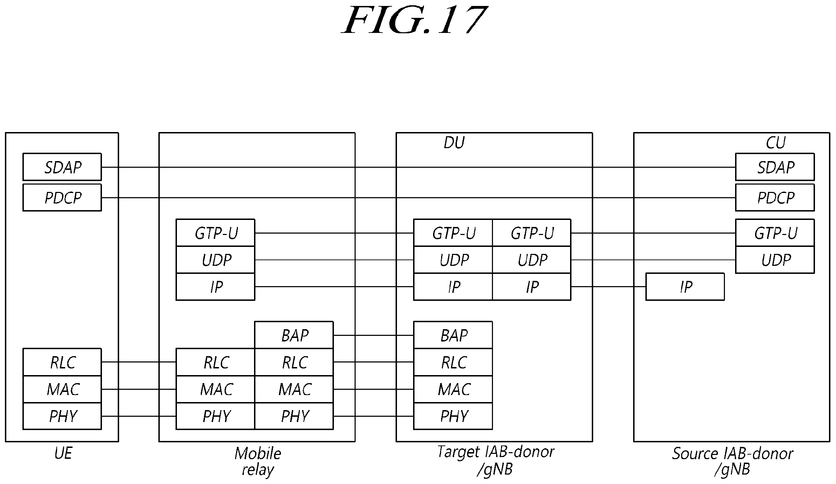

The uplink user plane data of the user equipment served by the mobile relay may be mapped to the F1-U tunnel/GTP-U tunnel between the mobile relay and the source donor base station/IAB-donor-CU and the F1-U tunnel/GTP-U tunnel between the target donor base station/IAB-donor-CU and the source donor base station/IAB-donor-CU before being transmitted, as shown in FIG. 17. For example, the transmission path for user plane data of the user equipment served by the mobile relay may be transmitted and received by switching the path from "user equipment <-> source donor base station <-> core network" to "user equipment <-> target donor base station <-> source donor base station <-> core network". The user equipment connected to the corresponding mobile IAB node through the migration of a mobile IAB-DU may be handed over from a cell (i.e., a source cell) served by a DU having an F1AP conjunction with a source CU to a cell (i.e., a target cell) served by a DU having an F1AP conjunction with a target CU. As in the above-described embodiments, the handover of the mobile IAB-MT and the migration of the mobile IAB-DU may be executed in conjunction or independently. No path switch procedure between the base station and the core network is requested at this stage.

The BAP entity (e.g., the transmitting part of the BAP entity) of the mobile relay may receive BAP SDUs from an upper layer (e.g., GTP-U/UDP/IP). Furthermore, using uplink user plane tunnel information to be established in the mobile relay received from the source donor base station/IAB-donor-CU (or from the target donor base station/IAB-donor-CU through the source donor base station/IAB-donor-CU or from the target donor base station/IAB-donor-CU), a BAP address and a path ID may be determined and a BAP PDU header may be added to create BAP Data PDUs. The source donor base station/IAB-donor-CU or the target donor base station/IAB-donor-CU may direct the uplink user plane tunnel information to be established/modified to the mobile relay via F1AP/RRC messages. The uplink user plane tunnel information to be established/modified, which is directed to the mobile relay, may be associated with at least one of a source base station user equipment XnAP identifier, a target base station user equipment XnAP identifier, a user plane DRB/RLC channel ID, an uplink user plane TNL address (GTP tunnel, transport-layer-address/IP-address, GTP-TEID), and backhaul information of the user equipment served by the mobile relay. Here, the backhaul information may include a BAP routing ID and a next-hop BAP address, which include the BAP address and the path ID of the target IAB-donor/IAB-donor-DU.

One or more pieces of information included in the uplink user plane tunnel information to be established/modified may be transmitted and received between the source donor base station/IAB-donor-CU and the target donor base station/IAB-donor-CU. In an example, the source donor base station/IAB-donor-CU may transmit an XnAP message to the target donor base station/IAB-donor-CU by including one or more pieces of the information included in the uplink user plane tunnel information to be established/modified (e.g., the source base station user equipment XnAP identifier, the user plane DRB-ID/RLC channel ID/LCID of the user equipment served by the mobile relay, the uplink user plane TNL address of the target donor base station/IAB-donor-CU/IAB-donor-DU, or the uplink user plane TNL address of the source donor base station/IAB-donor-CU/IAB-donor-DU) in the XnAP message. In another example, the target donor base station/IAB-donor-CU may transmit the XnAP message to the source donor base station/IAB-donor-CU by including one or more pieces of information (e.g., the target base station user equipment XnAP identifier, the target base station user equipment XnAP identifier, or the target IAB-donor/IAB-donor-DU BAP routing ID) to be established/modified in the XnAP message.

The source donor base station/IAB-donor-CU or the target donor base station/IAB-donor-CU may transmit the uplink user plane tunnel information to be established/modified to the mobile relay via F1AP/RRC messages. For example, the source donor base station/IAB-donor-CU may transmit the corresponding uplink user plane tunnel information to be set up/modified to the source mobile relay DU via an F1AP message. The target donor base station/IAB-donor-CU may transmit the corresponding uplink user plane tunnel information to be set up/modified to the target mobile relay DU/MT via the F1AP message. The target donor base station/IAB-donor-CU may transmit the corresponding uplink user plane tunnel information to be set up/modified to the mobile relay MT via the RRC message.

The mobile relay or the source donor base station/IAB-donor-CU may direct the downlink user plane tunnel information to be established/modified to the target donor base station/IAB-donor-CU via F1AP/XnAP/RRC messages. The downlink user plane tunnel information to be established/modified, which is directed to the target donor base station/IAB-donor-CU, may be associated with the source base station user equipment XnAP identifier, the target base station user equipment XnAP identifier, the user plane DRB-ID/RLC channel ID/LCID, the downlink user plane TNL address (e.g., a GTP tunnel, a transport-layer-address/IP-address, or a GTP-TEID) of the mobile relay, and the downlink user plane TNL address of the target donor base station/IAB-donor-CU of the user equipment served by the mobile relay.

The source donor base station/IAB-donor-CU and the target donor base station/IAB-donor-CU may exchange, through coordination, one or more pieces of information included in the uplink user plane tunnel information to be established/modified and one or more pieces of information included in the downlink user plane tunnel information to be established/modified, so that the transmission path for the user plane data of the user equipment served by the mobile relay is switched from "user equipment <-> source donor base station <-> core network" to "user equipment <-> target donor base station <-> source donor base station <-> core network" for transmission and reception. For example, such information may be included in the handover request message and/or the handover request acknowledgment/response message to be transmitted and received in step 1 and step 2 of FIG. 15. As another example, the information may be transmitted and received by being included in any XnAP message for switching the transmission path after step 7 of FIG. 15. As another example, in case of a conditional handover/RRC reset, the information may be transmitted and received by being included in any XnAP message for switching the transmission path after the conditional handover is configured on the user equipment.

The source donor base station/IAB-donor-CU or the target donor base station/IAB-donor-CU may transmit the uplink user plane tunnel information to be established/modified and the downlink user plane tunnel information to be established/modified to the mobile relay via F1AP/RRC messages. The source donor base station/IAB-donor-CU may transmit the uplink user plane tunnel information to be established/modified and the downlink user plane tunnel information to be established/modified to the target donor base station/IAB-donor-CU via the XnAP message.

When receiving F1AP/RRC messages including the information described above, the mobile relay may create BAP data PDUs including the BAP routing ID of the target donor station/IAB-donor/IAB-donor-DU in the BAP header. The mobile relay may also perform a BAP header rewriting operation upon receiving F1AP/RRC messages including the above-described information. For example, the mobile relay may replace the BAP routing ID (e.g., BAP address or BAP path ID) of the source donor station/IAB-donor/IAB-donor-DU with the BAP routing ID of the source donor station/IAB-donor/IAB-donor-DU in the header of the BAP data PDU. The rewriting operation may be performed in any of the steps specified in this specification or by any indication information. In this regard, the indication information may include information for directing the rewriting of the F1AP/RRC message BAP header and/or configuration information for this purpose (e.g., source BAP routing ID or target BAP routing ID).

In another example, during the handover/topology adjustment of the mobile relay and/or during the handover of the user equipment served by the mobile relay, the F1-U/GTP-U tunnel between the mobile relay and the target donor base station/IAB-donor-CU/IAB-donor-DU may be established, set up, and/or modified to associate the data wireless bearer (DRB) carrying the user data of the user equipment served by the mobile relay. The user plane traffic of the user equipment served by the mobile relay may be transferred from the target donor base station/IAB-donor-CU to the core network.

Through the handover/topology adjustment of the mobile relay and/or the handover of the user equipment served by the mobile relay, the donor base station/IAB-donor-CU servicing the mobile relay changes from the source donor base station/IAB-donor-CU to the target donor base station/IAB-donor-CU. The user equipment context for the user equipment served by the mobile relay may be released in the source donor base station/IAB-donor-CU via the corresponding message (e.g., the user equipment context release message). In addition, or optionally, the user equipment context for the user equipment served by the mobile relay may be maintained in the target donor base station/IAB-donor-CU.

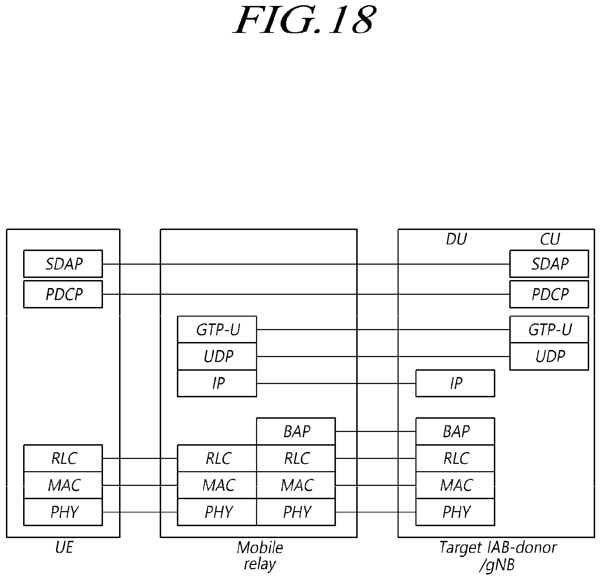

In an example, the uplink user plane data of the user equipment served by the mobile relay may be mapped/associated in the mobile relay to be transmitted to the core network via the target donor base station/IAB-donor-CU. The uplink user plane data of the user equipment served by the mobile relay may be transmitted by being mapped to the F1-U tunnel/GTP-U tunnel between the mobile relay and the target donor base station/IAB-donor-CU, as shown in FIG. 18. For example, the transmission path for the user plane data of the user equipment served by the mobile relay may be switched from "user equipment <-> source donor base station <-> core network" to "user equipment <-> target donor base station <-> core network" to transmit and receive the data.

The BAP entity (e.g., the transmitting part of the BAP entity) of the mobile relay may receive BAP SDUs from an upper layer (e.g., GTP-U/UDP/IP). Furthermore, using uplink user plane tunnel information to be established in the mobile relay received from the source donor base station/IAB-donor-CU (or from the target donor base station/IAB-donor-CU through the source donor base station/IAB-donor-CU or from the target donor base station/IAB-donor-CU), a BAP address and a path ID may be determined and a BAP PDU header may be added to create BAP Data PDUs. The source donor base station/IAB-donor-CU or the target donor base station/IAB-donor-CU may direct the uplink user plane tunnel information to be established/modified to the mobile relay via F1AP/RRC messages. The uplink user plane tunnel information to be established/modified, which is directed to the mobile relay, may be associated with at least one of a source base station user equipment XnAP identifier, a target base station user equipment XnAP identifier, a user plane DRB/RLC channel ID, an uplink user plane TNL address (GTP tunnel, transport-layer-address/IP-address, GTP-TEID), and backhaul information of the user equipment served by the mobile relay. Here, the backhaul information may include a BAP routing ID and a next-hop BAP address, which include the BAP address and the path ID of the target IAB-donor/IAB-donor-DU.

One or more pieces of information included in the uplink user plane tunnel information to be established/modified may be transmitted and received between the source donor base station/IAB-donor-CU and the target donor base station/IAB-donor-CU. In an example, the source donor base station/IAB-donor-CU may transmit an XnAP message to the target donor base station/IAB-donor-CU by including one or more pieces of the information included in the uplink user plane tunnel information to be established/modified (e.g., the source base station user equipment XnAP identifier, the user plane DRB-ID/RLC channel ID/LCID of the user equipment served by the mobile relay, or the uplink user plane TNL address of the target donor base station/IAB-donor-CU/IAB-donor-DU) in the XnAP message. In another example, the target donor base station/IAB-donor-CU may transmit the XnAP message to the source donor base station/IAB-donor-CU by including one or more pieces of information (e.g., the source base station user equipment XnAP identifier, the target base station user equipment XnAP identifier, or the target IAB-donor/IAB-donor-DU BAP routing ID) to be established/modified in the XnAP message.

The source donor base station/IAB-donor-CU or the target donor base station/IAB-donor-CU may transmit the uplink user plane tunnel information to be established/modified to the mobile relay via F1AP/RRC messages. For example, the source donor base station/IAB-donor-CU may transmit the corresponding uplink user plane tunnel information to be set up/modified to the source mobile relay DU via an F1AP message. The target donor base station/IAB-donor-CU may transmit the corresponding uplink user plane tunnel information to be set up/modified to the target mobile relay DU/MT via the F1AP message. The target donor base station/IAB-donor-CU may transmit the corresponding uplink user plane tunnel information to be set up/modified to the mobile relay MT via the RRC message.

The mobile relay or the source donor base station/IAB-donor-CU may direct the downlink user plane tunnel information to be established/modified to the target donor base station/IAB-donor-CU via F1AP/XnAP/RRC messages. The downlink user plane tunnel information to be established/modified, which is directed to the target donor base station/IAB-donor-CU, may be associated with the source base station user equipment XnAP identifier, the target base station user equipment XnAP identifier, the user plane DRB-ID/RLC channel ID/LCID, and the downlink user plane TNL address of the mobile relay (e.g., a GTP tunnel, a transport-layer-address/IP-address, or a GTP-TEID) of the user equipment served by the mobile relay.

The source donor base station/IAB-donor-CU and the target donor base station/IAB-donor-CU may exchange, through coordination, one or more pieces of information included in the uplink user plane tunnel information to be established/modified and one or more pieces of information included in the downlink user plane tunnel information to be established/modified, so that the transmission path for the user plane data of the user equipment served by the mobile relay is switched from "user equipment <-> source donor base station <-> core network" to "user equipment <-> target donor base station <-> core network" for transmission and reception. For example, such information may be included in the handover request message and/or the handover request acknowledgment/response message to be transmitted and received in step 1 and step 2 of FIG. 15. As another example, the information may be transmitted and received by being included in any XnAP message for switching the transmission path after step 7 of FIG. 15. As another example, in case of a conditional handover/RRC reset, the information may be transmitted and received by being included in any XnAP message for switching the transmission path after the conditional handover is configured on the user equipment.

The source donor base station/IAB-donor-CU or the target donor base station/IAB-donor-CU may transmit the uplink user plane tunnel information to be established/modified and the downlink user plane tunnel information to be established/modified to the mobile relay via F1AP/RRC messages. The source donor base station/IAB-donor-CU may transmit the uplink user plane tunnel information to be established/modified and/or the downlink user plane tunnel information to be established/modified to the target donor base station/IAB-donor-CU via the XnAP message.

When receiving F1AP/RRC messages including the information described above, the mobile relay may create BAP data PDUs including the BAP routing ID of the target donor station/IAB-donor/IAB-donor-DU in the BAP header. The mobile relay may also perform a BAP header rewriting operation upon receiving F1AP/RRC messages including the above-described information. For example, the mobile relay may replace the BAP routing ID (e.g., BAP address or BAP path ID) of the source donor station/IAB-donor/IAB-donor-DU with the BAP routing ID of the source donor station/IAB-donor/IAB-donor-DU in the header of the BAP data PDU. The rewriting operation may be performed in any of the steps specified in this specification or by any indication information. In this regard, the indication information may include information for directing the rewriting of the F1AP/RRC message BAP header and/or configuration information for this purpose (e.g., source BAP routing ID or target BAP routing ID).

In another example, to support the transmission of F1-C traffic between the mobile relay and the donor base station/IAB-donor-CU, F1-C traffic including a control message of the user equipment served by the mobile relay, or user plane data of the user equipment served by the mobile relay, the target donor base station/IAB-donor-CU may configure, on the target path between the mobile relay and the target IAB-donor-DU/IAB-donor-CU, information of at least one of a gNB-CU UE F1AP ID, a gNB-DU UE F1AP ID, a user plane DRB-ID/RLC channel ID/LCID, a downlink user plane TNL address of the mobile relay, an uplink TNL address of the target donor base station/IAB-donor-CU, a backhaul RLC channel (e.g., a backhaul RLC channel ID), a BAP routing entry (e.g., a BAP routing ID, a BAP address, or a BAP path id), or downlink mapping information on the target IAB-donor-DU for the target path of the mobile relay (e.g., a single or plurality of pieces of TNL address information of the mobile relay for F1-C traffic/user plane traffic).

The target IAB-donor-DU/IAB-donor-CU may configure/direct the corresponding information to the mobile relay via F1AP/RRC messages.

In another example, the mobile relay may assign new TNL address information for each user plane F1-U/GTP-U tunnel associated with the corresponding DBR for the user equipment served by the mobile relay and transfer the new TNL address information to the source donor base station/IAB-donor-CU, in which the new TNL address information is different from the TNL address used for the source donor base station/IAB-donor-CU. The source donor base station/IAB-donor-CU may transfer the received information to the target donor base station/IAB-donor-CU. The target donor base station/IAB-donor-CU may respond by including the identifier of the user equipment to be switched to the source donor base station/IAB-donor-CU, the DRB identifier/RLC identifier/LCID, the backhaul RLC channel identifier, the uplink TNL address for user plane traffic, and the downlink TNL address. Using the new TNL address information of the mobile relay, the F1-U connection between the mobile relay and the source donor base station/IAB-donor-CU may be switched to an F1-U connection between the mobile relay and the target donor base station/IAB-donor-CU. The user plane traffic of the user equipment served by the mobile relay may be transferred from the target donor base station/IAB-donor-CU to the core network. The source donor base station/IAB-donor-CU may provide updated uplink backhaul information to the mobile relay based on the uplink backhaul information (backhauling ID) received from the target donor base station/IAB-donor-CU.

The above-described operation may be performed at any of the steps included in FIG. 15, or before any of the steps included in FIG. 15, or after any of the steps included in FIG. 15. For clarity of explanation and ease of understanding, the operation may be described as being at a particular step, before a particular step, or after a particular step. However, it will be appreciated that this is for clarity of explanation and ease of understanding only, and that the disclosure also includes the operation being performed at any step included in FIG. 15, or before any step included in FIG. 15, or after any step included in FIG. 15.

As described above, access control and mobility control may be effectively performed for the mobile relay in accordance with an embodiment.

In the following, configurations of the source donor base station and the target donor base station, which may implement some or all of the respective embodiments described with reference to FIGS. 1 to 18, will be described again.

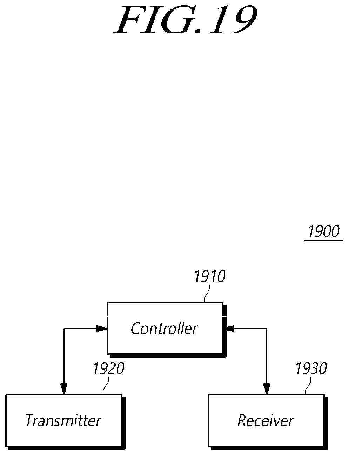

FIG. 19 is a block diagram illustrating a source donor base station according to an embodiment.

Referring to FIG. 19, a source donor base station 1900 controls the operation of a mobile relay in accordance with an embodiment. The source donor base station 1900 may include: a transmitter 1920 which transmits a handover request message to a target donor base station; a receiver 1930 which receives, from the target donor base station, a handover response message including radio resource configuration information for at least one of a mobile relay or user equipment served by the mobile relay; and a controller 1910 which performs control so that the radio resource configuration information is directed to at least one of the mobile relay and the user equipment.

For example, the controller 1910 may determine whether to hand over the mobile relay or the user equipment served by the mobile relay. The transmitter 1920 may transmit a handover request message to a target donor base station to request for a handover. Herein, the target donor base station is the target of the handover of the mobile relay or the user equipment served by the mobile relay. The handover request message may be an RRC message.

The handover request message may include information requested by the mobile relay or the user equipment served by the mobile relay for the handover to the target donor base station.

According to an embodiment, the handover request message may include an RRC container having information requested by the target side to prepare for the handover (e.g., a handover preparation message).

According to another embodiment, the handover request message may include at least one of handover indication information of the mobile relay, cell indication information being served by the mobile relay, and user equipment context information for the user equipment being served by the mobile relay.

According to another embodiment, the handover indication information of the mobile relay may include at least one of mobile terminal (MT) handover indication information of the mobile relay and distributed unit (DU) migration indication information of the mobile relay. According to another embodiment, the cell indication information being served by the mobile relay may include at least one of cell indication information being served by a DU of the mobile relay or cell indication information provided by the mobile relay.

According to another embodiment, the handover request message may include at least one of BAP address information of the moving mobile relay, TNL address information (e.g., IP address information for the mobile relay and/or uplink/downlink transport-layer-address/IP-address or GTP-TEID(s) for mobile-relay-user-plane-traffic/F1-U-traffic), and a mobile relay identifier.

According to an embodiment, the handover indication information of the mobile relay may include information directing that the handover is for the mobile relay. Accordingly, the target donor base station/IAB-donor-CU may recognize that the handover is for the mobile relay and process accordingly.

According to another embodiment, in response to the handover request message, the target donor base station may perform acceptance control for the handover request. The target donor base station may transmit a handover response message to the source donor base station in response to the handover request in the handover request message. The target donor base station may provide an RRC configuration as a part of the handover response message.

According to an embodiment, the handover response message may include at least one information of BAP address information, default backhaul RLC channel information, default BAP routing ID, uplink/downlink TNL address information, and a mobile relay identifier for the mobile relay connected to the target donor base station. The information may be used as information for mapping F1-C traffic, F1-U traffic, and/or non-F1 traffic to the target donor base station (via a target path).

According to another embodiment, the handover response message may include radio resource configuration information for at least one of the mobile relay or the user equipment served by the mobile relay. The radio resource configuration information may include at least one of BAP address information, default backhaul RLC channel information, a default BAP routing ID, uplink/downlink TNL address information, and a mobile relay identifier for the above-described mobile relay.

According to another embodiment, the radio resource configuration information may further include time-based event condition information for triggering a conditional handover of the user equipment served by the mobile relay. The information included in the handover response message described above may be included in the RRC container and transferred to the source donor base station.

For example, the transmitter 1920 may transmit the RRC container received from the target donor base station to at least one of the mobile relay and the user equipment to transfer radio resource configuration information.

The radio resource configuration information may be transmitted to the mobile relay via RRC connection reconfiguration messages. When having received the RRC connection reconfiguration message, the mobile relay may perform a random access procedure to the target donor base station to initiate a handover procedure.

In addition, the user equipment served by the mobile relay may be configured to skip the random access procedure when executing the handover. That is, the user equipment served by the mobile relay may be configured not to perform the random access procedure even in the case that the mobile relay performs the random access procedure for a handover to the target donor base station.

The mobile relay may broadcast mobile relay support information for cell reselection of the user equipment. For example, the mobile relay may periodically or aperiodically transmit system information including cell information provided by the mobile relay, information requested for accessing the mobile relay, and the like.

In addition, the controller 1910 controls the overall operation of the source donor base station 1900 in accordance with mobile relay control operations requested for realizing the above-described embodiments.

The transmitter 1920 and the receiver 1930 are used to transmit and receive signals, messages, or data, which are necessary to realize the embodiments, to and from the user equipment or the target donor base station.

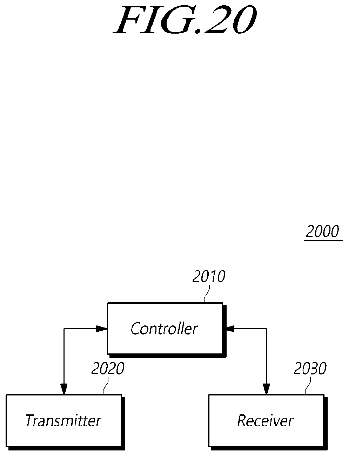

FIG. 20 is a block diagram illustrating a target donor base station according to an embodiment.

Referring to FIG. 20, a target donor base station 2000 controls the operation of a mobile relay according to an embodiment. The target donor base station 200 may include: a receiver 2030 which receives a handover request message from a source donor base station; and a transmitter 2020 which transmits a handover response message to the source donor base station, the handover response message including radio resource configuration information for at least one of the mobile relay or user equipment served by the mobile relay. The radio resource configuration information may be directed by the source donor base station to at least one of the mobile relay and the user equipment.

For example, the source donor base station may determine whether to hand over the mobile relay or the user equipment served by the mobile relay. The receiver 2030 may receive the handover request message heading to a target donor base station to request for a handover. Herein, the target donor base station is the target of the handover of the mobile relay or the user equipment served by the mobile relay. The handover request message may be an RRC message.

The handover request message may include information requested by the mobile relay or the user equipment served by the mobile relay for the handover to the target donor base station.

According to an embodiment, the handover request message may include an RRC container having information requested by the target side to prepare for the handover (e.g., a handover preparation message).

According to another embodiment, the handover request message may include at least one of handover indication information of the mobile relay, cell indication information being served by the mobile relay, and user equipment context information for the user equipment being served by the mobile relay.

According to another embodiment, the handover indication information of the mobile relay may include at least one of mobile terminal (MT) handover indication information of the mobile relay or distributed unit (DU) migration indication information of the mobile relay. According to another embodiment, the cell indication information being served by the mobile relay may include at least one of cell indication information being served by a DU of the mobile relay and cell indication information provided by the mobile relay.

According to another embodiment, the handover request message may include at least one of BAP address information of the moving mobile relay, TNL address information (e.g., IP address information for the mobile relay and/or uplink/downlink transport-layer-address/IP-address or GTP-TEID(s) for mobile-relay-user-plane-traffic/F1-U-traffic), and a mobile relay identifier.

According to an embodiment, the handover indication information of the mobile relay may include information directing that the handover is for the mobile relay. Accordingly, the target donor base station/IAB-donor-CU may recognize that the handover is for the mobile relay and process accordingly.

According to an embodiment, in response to the handover request message, the controller 2010 may perform acceptance control for the handover request. The transmitter 2020 may transmit a handover response message to the source donor base station in response to the handover request in the handover request message. The transmitter 2020 may provide an RRC configuration as a part of the handover response message.

According to an embodiment, the handover response message may include at least one information of BAP address information, default backhaul RLC channel information, default BAP routing ID, uplink/downlink TNL address information, and a mobile relay identifier for the mobile relay connected to the target donor base station. The information may be used as information for mapping F1-C traffic, F1-U traffic, and/or non-F1 traffic to the target donor base station (via a target path).

According to another embodiment, the handover response message may include radio resource configuration information for at least one of the mobile relay or the user equipment served by the mobile relay. The radio resource configuration information may include at least one of BAP address information, default backhaul RLC channel information, a default BAP routing ID, uplink/downlink TNL address information, and a mobile relay identifier for the above-described mobile relay.

According to another embodiment, the radio resource configuration information may further include time-based event condition information for triggering a conditional handover of the user equipment served by the mobile relay.

The information included in the handover response message described above may be included in the RRC container and transferred to the source donor base station. That is, the radio resource configuration information may be directed by the source donor base station to at least one of the mobile relay and the user equipment.

For example, the source donor base station may transmit the RRC container received from the target donor base station to at least one of the mobile relay or the user equipment to transfer radio resource configuration information.

The radio resource configuration information may be transmitted to the mobile relay via RRC connection reconfiguration messages. When having received the RRC connection reconfiguration message, the mobile relay may perform a random access procedure to the target donor base station to initiate a handover procedure.

In addition, the user equipment served by the mobile relay may be configured to skip the random access procedure when executing the handover. That is, the user equipment served by the mobile relay may be configured not to perform the random access procedure even in the case that the mobile relay performs the random access procedure for a handover to the target donor base station.

The mobile relay may broadcast mobile relay support information for cell reselection of the user equipment. For example, the mobile relay may periodically or aperiodically transmit system information including cell information provided by the mobile relay, information requested for accessing the mobile relay, and the like.

In addition, the controller 2010 controls the overall operation of the source donor base station 2000 in accordance with mobile relay control operations requested for realizing the above-described embodiments.

The transmitter 2020 and the receiver 2030 are used to transmit and receive signals, messages, or data, which are necessary to realize the embodiments, to and from the user equipment or the source donor base station.

The foregoing embodiments of the disclosure may be supported by standard documents of at least one of the IEEE 802 system, the 3GPP system, and the 3GPP2 system, all of which are radio (or wireless) access systems. That is, steps, elements, or portions not described in embodiments of the disclosure for the sake of clearly describing the spirit of the disclosure may be supported by the standard documents. For all terms used herein, reference may be made to the standard documents.

The foregoing embodiments of the disclosure may be implemented using a variety of means. For example, embodiments of the disclosure may be implemented using hardware, firmware, software, or any combination thereof.

In case that the disclosure is implemented using hardware, the methods according to embodiments of the disclosure may be realized using one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

In case that the disclosure is implemented using firmware or software, the methods according to embodiments of the disclosure may be implemented in the form of devices, processes, functions, or the like performing the functions or operations described above. Software codes may be stored in a memory unit so as to be executed by a processor. The memory unit may be located inside or outside of the processor and may exchange data with the processor via a variety of known means.

The terms, such as "system", "processor", "controller", "element", "module", "interface", "model", or "unit", used herein may generally refer to computer-related entity hardware, a combination of hardware and software, software, or software in execution. For example, the above-described elements may be at least one selected from among, but is not limited to, a process, a processor, a controller, a control processor, an entity, an execution thread, a program, and a computer. For example, both an application being executed by the controller or processor and the controller or processor may be an element. One or more elements may reside in at least one of a process and an execution thread. An element may be located in a single device (e.g., a system or a computing device) or may be distributed to two or more devices.

The foregoing descriptions have been presented in order to explain certain principles of the disclosure by way of example. A person having ordinary knowledge in the technical field to which the disclosure pertains could make various modifications and variations without departing from the essential features of the principle of the disclosure. In addition, the foregoing embodiments shall be interpreted as being illustrative, while not being limitative, of the principle and scope of the disclosure. It should be understood that the scope of protection of the disclosure shall be defined by the appended Claims and all of their equivalents fall within the scope of protection of the disclosure.

### CROSS-REFERENCE TO RELATED APPLICATION

This application claims priority under 35 U.S.C. §119 (a) of the United States Patent Act to Korean Patent Application Nos. 10-2022-0081684, filed on July 4, 2022, and 10-2023-0083426, filed on June 28, 2023, all of which are hereby incorporated by reference for all purposes as if fully set forth herein. In addition, when this application also claims priority for countries other than the United States for the same reason as above, all of the contents of the above-listed applications are hereby incorporated by reference.

## Claims

1. A method of controlling operations of a mobile relay by a source donor base station, the method comprising:
transmitting a handover request message to a target donor base station;
receiving, from the target donor base station, a handover response message comprising radio resource configuration information for at least one of a mobile relay and user equipment served by the mobile relay; and
performing control to direct radio resource configuration information to at least one of the mobile relay and the user equipment.

2. The method of claim 1, wherein the handover request message comprises at least one of handover indication information of the mobile relay, cell indication information being served by the mobile relay, and user equipment context information for the user equipment served by the mobile relay.

3. The method of claim 2, wherein the handover indication information of the mobile relay comprises at least one of mobile terminal (MT) handover indication information of the mobile relay and distributed unit (DU) migration indication information of the mobile relay, and
the cell indication information being served by the mobile relay comprises at least one of cell indication information being served by the DU of the mobile relay and cell indication information provided by the mobile relay.

4. The method of claim 1, wherein the user equipment served by the mobile relay is configured to bypass a random access procedure when executing the handover.

5. The method of claim 1, wherein the radio resource configuration information comprises time-based event condition information for triggering a conditional handover of the user equipment served by the mobile relay.

6. The method of claim 1, wherein the mobile relay broadcasts mobile relay support information for cell reselection of the user equipment.

7. A method of controlling operations of a mobile relay by a target donor base station, the method comprising:
receiving a handover request message from a source donor base station; and
transmitting, to the source donor base station, a handover response message comprising radio resource configuration information for at least one of a mobile relay and user equipment served by the mobile relay,
wherein the radio resource configuration information is directed by the source donor base station to at least one of the mobile relay and the user equipment.

8. The method of claim 7, wherein the handover request message comprises at least one of handover indication information of the mobile relay, cell indication information being served by the mobile relay, and user equipment context information for the user equipment served by the mobile relay.

9. The method of claim 8, wherein the handover indication information of the mobile relay comprises at least one of mobile terminal (MT) handover indication information of the mobile relay and distributed unit (DU) migration indication information of the mobile relay, and
the cell indication information being served by the mobile relay comprises at least one of cell indication information being served by the DU of the mobile relay and cell indication information provided by the mobile relay.

10. The method of claim 7, wherein the user equipment served by the mobile relay is configured to bypass a random access procedure when executing the handover.

11. The method of claim 7, wherein the radio resource configuration information comprises time-based event condition information for triggering a conditional handover of the user equipment served by the mobile relay.

12. The method of claim 7, wherein the mobile relay broadcasts mobile relay support information for cell reselection of the user equipment.

13. A source donor base station which controls operations of a mobile relay, the source donor base station comprising:
a transmitter configured to transmit a handover request message to a target donor base station;
a receiver configured to receive, from the target donor base station, a handover response message comprising radio resource configuration information for at least one of a mobile relay and user equipment served by the mobile relay; and
a controller configured to control to direct the radio resource configuration information to at least one of the mobile relay and the user equipment.

14. The source donor base station of claim 13, wherein the handover request message comprises at least one of handover indication information of the mobile relay, cell indication information being served by the mobile relay, and user equipment context information for the user equipment served by the mobile relay.

15. The source donor base station of claim 14, wherein the handover indication information of the mobile relay comprises at least one of mobile terminal (MT) handover indication information of the mobile relay and distributed unit (DU) migration indication information of the mobile relay, and
the cell indication information being served by the mobile relay comprises at least one of cell indication information being served by the DU of the mobile relay and cell indication information provided by the mobile relay.

16. The source donor base station of claim 13, wherein the user equipment served by the mobile relay is configured to bypass a random access procedure when executing the handover.

17. The source donor base station of claim 13, wherein the radio resource configuration information comprises time-based event condition information for triggering a conditional handover of the user equipment served by the mobile relay.

18. The source donor base station of claim 13, wherein the mobile relay broadcasts mobile relay support information for cell reselection of the user equipment.
